(19) Europäisches Patentamt / European Patent Office / Office européen des brevets

(11) **EP 2 063 287 A1**

(12) **EUROPEAN PATENT APPLICATION**
published in accordance with Art. 153(4) EPC

(43) Date of publication:
**27.05.2009 Bulletin 2009/22**

(51) Int Cl.:
**G01S 5/30** (2006.01)  **G01S 15/74** (2006.01)
**G01S 17/06** (2006.01)

(21) Application number: **07792712.7**

(22) Date of filing: **20.08.2007**

(86) International application number:
**PCT/JP2007/066098**

(87) International publication number:
**WO 2008/026463 (06.03.2008 Gazette 2008/10)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **30.08.2006 JP 2006233015**

(71) Applicant: **NEC Corporation**
**Minato-ku**
**Tokyo 108-8001 (JP)**

(72) Inventor: **FUNADA, Junichi**
**Minato-ku**
**Tokyo 108-8001 (JP)**

(74) Representative: **Betten & Resch**
**Patentanwälte**
**Theatinerstrasse 8**
**(Fünf Höfe)**
**80333 München (DE)**

(54) **LOCALIZATION SYSTEM, ROBOT, LOCALIZATION METHOD, AND SOUND SOURCE LOCALIZATION PROGRAM**

(57)    A localization system capable of measuring an accurate positional relationship between an ultrasonic tag and a microphone and identifying a sound source position, even if an object is present between the ultrasonic tag and the microphone, is provided. When a radio transmission unit 101 transmits a radio wave including a command to transmit an ultrasonic wave, an ultrasonic wave transmission unit 201 of an ultrasonic tag 200 receives it and transmits an ultrasonic wave. Then, a plurality of microphones in an ultrasonic wave reception array unit 102 receive the ultrasonic wave. A propagation time calculation unit 103 calculates a time period between the time when the radio wave is transmitted by the radio transmission unit 101 and the time when an ultrasonic wave reaches each of the microphones in the ultrasonic wave reception array unit 102. Further, an object detection unit 104 detects an object present around the ultrasonic wave reception array unit 102. A position estimation unit 105 calculates the position (sound source) of the ultrasonic tag 200 according to the arrival time at each of the microphones calculated by the propagation time calculation unit 103 and the result of object detection while considering reflection of the ultrasonic wave.

FIG. 1

EP 2 063 287 A1

**Description**

TECHNICAL FIELD

The present invention relates to a localization system for measuring the position of an object which generates sound waves. In particular, the present invention relates to a localization system for measuring the position of an object when an sound wave reflecting object is present near the object, a robot and a localization method utilizing this localization system, and its sound source localization program.

BACKGROUND ART

Knowing positions (one-dimensional position, two-dimensional position, and three-dimensional position) of objects and human beings is an important technique in human interfaces and robots. For instance, regarding a robot which performs voice interaction with a human being, it is expected that the voice recognition performance will be improved by directing the microphone orientation to a user with whom the robot will have a dialogue, and it is also expected that causing the face of the robot to face the user when they have a dialogue will provide effects in smoothly proceeding a dialogue between the person and the robot. Further, in the case where a human being and a robot share an object present in the space shared by the human being and the robot, the robot needs to know the accurate position of the object. For example, when the user instructs the robot to bring an object, the robot cannot operate the actuator to grab the object unless the robot detects the position of the instructed object.

Conventionally, methods for knowing three-dimensional positions of objects and human beings include a method in which images captured by a camera is processed so that objects and people are detected, and a method in which tags emitting or reflecting electromagnetic waves and infrared rays, such as RFID tags and infrared tags, are attached to objects and people and the positions of the tags are detected by a sensor. In such localization methods, ultrasonic tags are used to realize a localization method, in which tags emit ultrasonic waves which are received by a microphone array so that the positions of the tags are calculated.

The ultrasonic tags are **characterized in that** the position can be detected with about several cm accuracy, which is more accurate compared to other measures. Various techniques relating to three-dimensional localization devices using such ultrasonic tags have been disclosed. For example, an ultrasonic-type three-dimensional localization device has been known (e.g., Patent Document 1) in which an ultrasonic tag is called up by using a radio wave to be caused to emit an ultrasonic wave, and the ultrasonic wave is received by an ultrasonic microphone array, and then, the position of the ultrasonic tag is identified by the principle of triangulation, based on the time the sound wave takes to travel from the emission source of the ultrasonic tag to respective microphones of the ultrasonic microphone array, and the relative positional relationship between the respective microphones.

Patent Document 1: Japanese Patent Laid-Open Publication No. 2005-156250

DISCLOSURE OF THE INVENTION

PROBLEMS TO BE SOLVED BY THE INVENTION

However, in the conventional example, if an attempt is made to use a localization system utilizing an ultrasonic tag in a place where various objects are disposed such as in a room, localization may not be performed accurately because an ultrasonic wave is reflected on walls, objects, and the like.

That is, in the case of performing three-dimensional localization in a system utilizing an ultrasonic tag, as three-dimensional position is estimated based on an assumption that an ultrasonic wave emitted from the ultrasonic wave transmission unit of the ultrasonic tag directly reaches the respective microphones of the microphone array for detecting the ultrasonic wave without being reflected on other objects, if reflection is caused on other objects, localization cannot be performed accurately.

In other words, in an environment where a microphone array and an ultrasonic tag are disposed, how the ultrasonic wave is reflected to reach the respective microphone cannot be determined only from information obtained from the respective microphones. As such, the conventional example described above involves a disadvantage that accurate localization cannot be performed.

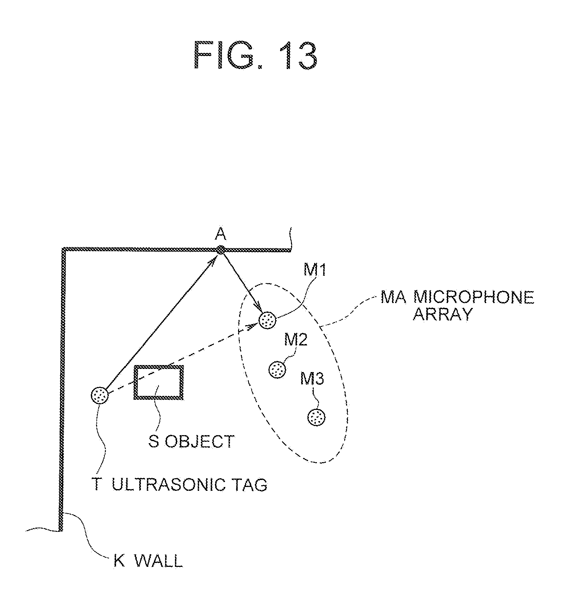

Fig. 13 shows a specific example of the case where localization of an ultrasonic tag cannot be performed accurately due to influences of surrounding objects.

As shown in Fig. 13, in the case where an object S is present on a line linking a microphone M1 in a microphone array MA composed of microphones M1, M2 and M3 and an ultrasonic tag T, and a wall K is present in the vicinity thereof as another object, an ultrasonic wave emitted from the ultrasonic tag T is reflected at a point A on the wall K and then reaches the microphone M1, because the object S interrupts the ultrasonic wave.

That is, as the ultrasonic wave cannot directly reach the microphone M1 because there is the object S on the path linearly linking the microphone M1 and the ultrasonic tag T, it is possible that a distance of a reflex path along which the ultrasonic wave emitted from the ultrasonic tag T travels, by being reflected at the wall K to reach the microphones M1, is determined as a linear distance between the microphone M1 and the ultrasonic tag T. This phenomenon is frequently caused in the case where a microphone array is mounted on a robot located near the floor, for example.

[Object of the Invention]

The present invention has been developed in view of the above-described circumstances, and an object of the present invention is to provide a localization system capable of measuring the position of a sound source about a microphone on the receiving side even in an environment where another object is present between the sound source such as an ultrasonic tag and a microphone or around thereof so that reflection of an ultrasonic wave is caused, and to provide a robot using the localization system, a localization method, and its sound source localization program.

MEANS FOR SOLVING THE PROBLEMS

In order to achieve the object, a localization system according to the present invention is a system for identifying the position of a sound source using propagation times of a sound wave propagating from the sound source to a plurality of microphones, including an object detection unit which detects the position, the shape and the like of a surrounding object present around the plurality of microphones, and a sound source position estimation unit which estimates the position of the sound source based on the propagation times.
The sound source position estimation unit has a reflection wave path estimation function for estimating a reflection wave path and its distance from the surrounding object identified by information from the object detection unit, and a sound source position estimation function for estimating the position of the sound source based on the reflection wave path and the distance.
With this configuration, as the positions and the shapes of reflective objects and interrupting objects around the microphones are recognized by the function of the object detection unit, it is possible to estimate the shortest paths of propagation paths of the sound wave (ultrasonic wave), and at the same time, the position of the sound source viewed from the respective microphone can be calculated based on the estimated shortest propagation paths of the sound and the corresponding propagation times of the sound wave. As such, by determining an area in which candidate areas where the ultrasonic tag may be present calculated from the respective microphones are overlapped as the position of the ultrasonic tag, the three-dimensional position of the sound source such as an ultrasonic tag can be calculated with higher accuracy, for example, than the case of not considering reflection caused by surrounding objects. Thereby, it is possible to measure the position of the abave-deseribed sound source (e.g., ultrasonic tag) accurately.
Further, a sound source localization program according to the present invention is a program for calculating propagation times of an ultrasonic wave propagating from the sound source to a plurality of microphones, and calculating the position of the sound source based on the respective propagation times of different ultrasonic waves detected by the plurality of microphones. The program is configured as to cause a computer to perform: a transmitting operation control function for controlling a radio wave transmission operation of a radio wave transmission unit which transmits a radio wave including an ultrasonic wave transmission command to an ultrasonic tag; a propagation time calculation function for calculating propagation times of an ultrasonic wave, transmitted from the ultrasonic tag and received by the plurality of microphones, from the time that the radio wave is transmitted until the time that the ultrasonic wave reaches the respective microphones; and a position estimation computing function for, if the position of a reflective object present around the microphone array has been detected beforehand, estimating a reflective propagation path of the ultrasonic wave from the detection result of the reflective object, and calculating the position of the ultrasonic tag based on the estimated reflective propagation path of the ultrasonic wave and the propagation time for each of the microphones calculated by the propagation time calculation function.

EFFECTS OF THE INVENTION

As the present invention is configured and works as described above, the object detection unit effectively works to recognize the arranging state of surrounding objects present around a plurality of microphones, and while considering reflection of an ultrasonic wave generated depending on the arranging state of the objects, candidate areas where the ultrasonic tag may be present are calculated from the positions of the microphones in the microphone array, and an area where the candidate areas where the ultrasonic tag may be present calculated from the respective microphones are overlapped is determined as the position of the ultrasonic tag. As such, compared from the case where reflection by the surrounding objects is not considered, the three-dimensional position of the sound source such as an ultrasonic tag can be calculated accurately for example, and even in a room where reflection of an ultrasonic wave by objects is frequently caused, measurement of the position of the sound source, that is, the positional relationship between the ultrasonic tag and the microphones can be measured accurately, for example. As such, it is possible to provide an excellent localization system which has not been able to be achieved conventionally, and a robot and a localization method using the localization system, and its sound source localization program.

BEST MODE FOR CARRYING OUT THE INVENTION

Hereinafter, exemplary embodiments of the invention will be described in accordance with accompanying drawings.

[First Exemplary Embodiment]

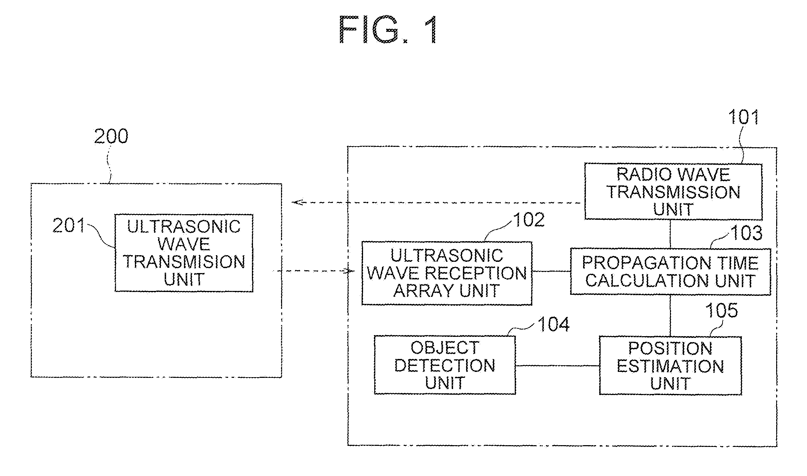

A first exemplary embodiment will be described based on Figs. 1 to 8.
First, the overview of the exemplary embodiment and the principle contents of the exemplary embodiment will be described, and then a specific exemplary embodiment of the invention will be described.

<Overview>

First, a localization system of the exemplary embodiment acquires the positions and the shapes of objects present around a microphone array and an ultrasonic tag by an object detection unit. Thereby, the system is capable of calculating the shortest paths from the ultrasonic wave transmission unit provided to the ultrasonic tag to the respective microphones configuring the microphone array, while considering reflection of the sound wave on the objects. With this configuration, with the elapsed time from the time that the sound wave is emitted from the ultrasonic wave transmission unit of the ultrasonic tag until it reaches the respective microphones being observed, it is possible to accurately calculate candidate areas for the ultrasonic tag which is present at a position where the sound wave can reach within the observed relapsed time.
More specifically, a candidate area where an ultrasonic tag may be present will be on a spherical face centered on a microphone having a radius of the length calculated by multiplying the elapsed time by the acoustic velocity, if there is no obstacle. However, if there is any obstacle (that is, object), a candidate area where the ultrasonic tag may be present is generally a combination of a plurality of faces present inside the sphere. In this case, a candidate area where the ultrasonic tag may be present can be estimated by detesting the position and the shape of the object by the object detection unit.
In this way, the candidate areas where the ultrasonic tag may be present are estimated for the respective microphones configuring the microphone array by the position estimation unit, and since the ultrasonic tag is present in a shared part of the respective candidate areas, the three-dimensional position of the ultrasonic tag can be calculated.

<Principle Content>

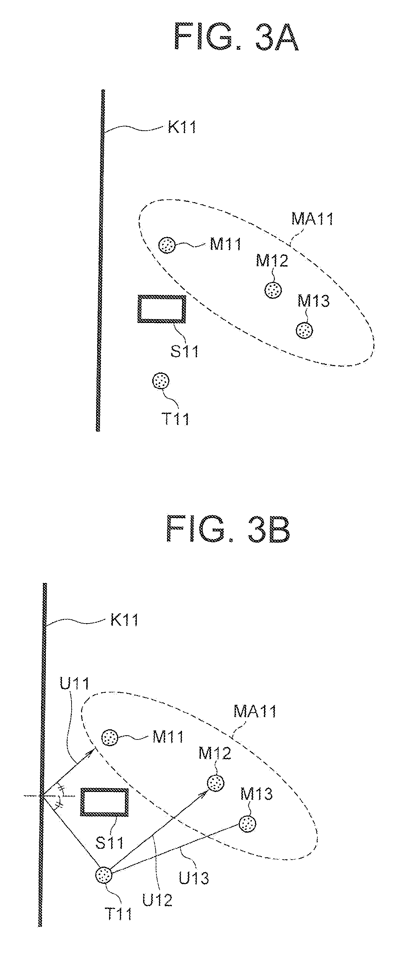

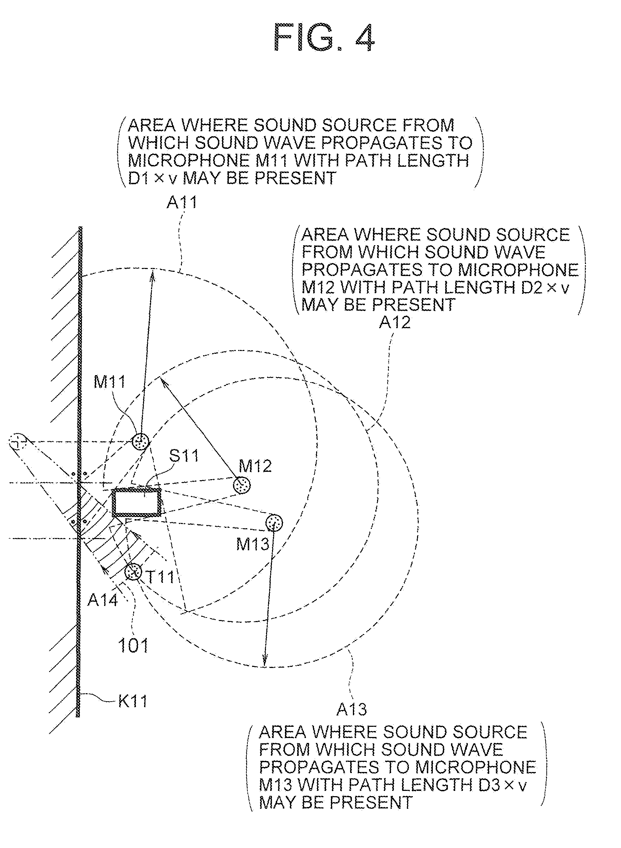

Next, the principle of the localization system utilizing an ultrasonic tag which is also a sound source will be described with reference to the drawings. Fig. 3(A) is an arrangement diagram for illustrating the principle of the localization system of the exemplary embodiment, Fig. 3(B) is a schematic diagram showing a state where an ultrasonic wave is emitted based on the arrangement diagram of Fig. 3(A), and Fig. 4 is a schematic diagram showing candidate areas where the ultrasonic tag may be present when the ultrasonic wave is emitted as shown in Fig. 3(B). With used of Figs. 3 to 4, the principle of the localization system utilizing an ultrasonic tag will be described.
Now, a place where an microphone array MA11 including microphones M11, M12, and M13, an ultrasonic tag T11, an object S11, and a wall K11 are arranged respectively on a plane is set as shown in Fig. 3(A), for example. In this example, a case where the three microphones M11 to M13, the ultrasonic tag T11, and the object S11 are present on one plane is exemplary shown. However, they are not necessarily present on one plane in practice. If they are not present on one plane, the same logic can be developed on a three-dimensional space.
In the case where the microphones M11 to M13, the ultrasonic tag 11 and the object S11 are arranged as shown in Fig. 3(A), ultrasonic waves U11, U12, and U13 which are emitted from the ultrasonic tag T11 and reach the microphones M11 to M13 respectively have the paths as shown in Fig. 3(B). That is, although the ultrasonic waves U12 and U13 emitted from the ultrasonic tag T11 reach the microphones M12 and M13 by taking the shortest paths, as the object S11 is being an obstacle for the path from the ultrasonic tag T11 to the microphone M11, the ultrasonic wave U11 from the ultrasonic tag T11 reflected at the wall K11 reaches first.
In a typical localization method (localization) utilizing an ultrasonic tag, a three-dimensional position of the ultrasonic tag T11 has been calculated when the relative positional relationships of the respective microphones M11 to M13 and the paths lengths from the ultrasonic tag T11 to the respective microphones M11 to M13 are given. That is, in the localization utilizing the conventional ultrasonic tag T11 in which reflection at the wall K is not considered, in a state where the ultrasonic wave reflects at the wall K11 as shown in Fig. 3(B), a portion where spheres having radiuses of the path lengths of the respective paths, including reflex paths, are overlapped, has been determined as an area where the ultrasonic tag T11 is present.

In other words, although the direct linear path from the ultrasonic tag T11 to the microphone M11 is short actually, a path of the ultrasonic wave U11 from the ultrasonic tag T11 reflected on the wall K11 and made incident on the microphones M11 is considered to be the shortest path. As such, an area where a sphere with a radius having a length of the path of the ultrasonic wave U11 reflected on the wall K11 and made incident on the microphone M11 and respective spheres with radiuses having lengths of the linear paths of the ultrasonic waves U12 and U13 made incident on the microphones M12 and M13 overlap with one another is determined as an area where the ultrasonic tag T11 is present. Accordingly, an area different from the area where the ultrasonic tag T11 is actually present is determined as an area where the ultrasonic tag T11 is present.

However, according to the localization of the ultrasonic tag T11 of the exemplary embodiment, an area which is behind the object S11 and where an ultrasonic wave from the ultrasonic tag T11 does not propagate to the respective microphones M11 to M13 is determined, with use of information regarding the result of detecting the position and the shape of the object S11 by another sensing device, as shown in Fig. 4. Thereby, an area where a sound source (ultrasonic tag T11) is present when the ultrasonic waves propagate with the linear path lengths from the respective microphones M11 to M13 to the ultrasonic tag T11 can be estimated accurately.

For example, with an assumption that a time period from the time an ultrasonic wave is emitted until it is received by the microphone M11 is D11, a time period from the time an ultrasonic wave is emitted until it is received by the microphone M12 is D12, and a time period from the time an ultrasonic wave is emitted until it is received by the microphone M13 is D13, and the acoustic velocity is v, an area where the sound source (ultrasonic tag T11) from which an ultrasonic wave propagates with a path length (D11*v) to the microphone M11 may be present is within a scope of a circle A11 as shown in Fig. 4.

Further, an area where the sound source (ultrasonic tag T11) from which an ultrasonic wave propagates with a path length (D12*v) to the microphone M12 may be present is within a scope of a circle A12, and an area where the sound source (ultrasonic tag T11) from which an ultrasonic wave propagates with a path length (D13*v) to the microphone M13 may be present is within a scope of a circle A13.

That is, in order that an ultrasonic wave propagates with a path length (D1*v) for the microphone M11, if reflection of the object S11 is considered, the sound source (ultrasonic tag T11) has to be within the area A11 indicated by a dotted line in Fig. 4. Although this area A11 is a sum area of a part of a sphere existing in a three-dimensional space and its fragments actually, only a two-dimensional plane on which the microphone M11, the object S11, and the ultrasonic tag T11 are present is shown in this description. Similarly, as for the microphones M12 and M13, candidates areas A12, and A13 of sound source positions are obtained as indicated by dotted lines, and it can be estimated that the ultrasonic tag T11 is present in a part A14 which is shared by the candidate areas A11, A12, and A13.

In other words, when the positions of the wall K11 and the object S11 being obstacles are detected by an LRF (laser range finder), considering the reflection at the object S11, it is found that the area where the ultrasonic wave propagation distance from the microphone M11 is D11*v is on the line of A11. It is also found that the area where the ultrasonic wave propagation distance from the microphone M12 is D12*v is on the line of A12, considering the reflection at the object S11. Further, it is also found that the area where the ultrasonic wave propagation distance from the microphone M13 is D13*v is on the line of A13, considering the reflection at the object S11.

As such, it is possible to determine that the area A14 where these three circles A11, A12, and A13 overlap with one another is an area where the ultrasonic tag T11 is present.

Further, in a localization system using the ultrasonic tag according to the exemplary embodiment, as the system includes a sensor moving mechanism and the object detection unit considering the movement, object detention can be performed in a wider area as described later. For example, a range finder generally used for detecting objects involves a problem that an observable range is up to an object positioned in front of measuring part (e.g., in the case of a laser range finder, laser light emitting unit and receiving unit) of the range finder so that an object positioned over such object is not observable (a problem so-called occlusion). As such, if object detection is performed by fixing the sensor, objects present in the environment cannot be observed sufficiently. In view of the above, the localization system of the present invention is adapted to allow observation of objects present in a wider range and estimation of reflecting state of sound waves with higher accuracy, by moving the sensor so as to observe objects in an area hidden behind the front object.

Further, in the localization system using the ultrasonic tag according to the exemplary embodiment, the accuracy of the object map can be improved by detecting an object present around the microphones and the ultrasonic tag by an object matching unit and utilizing the shape information of the object that the object matching unit stores beforehand.

For example, by arranging the shape of an object stored in the object matching unit on an object map, it is possible to estimate the shape of the object which cannot be observed by the sensor due to occlusion or the like. In general, there is a case where all of the objects present in the environment may not be observed by the object sensor due to problems such as occlusion, observable range, and accuracy. As such, by storing the shape of the objects beforehand, it is possible to efficiently acquire the shapes of the objects present in the environment without observing all of the shapes of the objects each time.

Hereinafter, the localization system using an ultrasonic tag according to the exemplary embodiment will be described specifically with reference to the drawings.

<Specific Configuration>

Fig. 1 is a block diagram showing the configuration of the localization system according to the first exemplary embodiment of the invention. The localization system shown in Fig. 1 includes an ultrasonic tag 200 which emits ultrasonic waves serving as a sound source, a radio wave transmission unit 101 which transmits radio waves to the ultrasonic tag 200, an ultrasonic wave reception array unit 102 including a plurality of microphones which receive ultrasonic waves from the ultrasonic tag 200, and a propagation time calculation unit 103 which calculates a time period required from when a radio wave is emitted from the radio wave emission unit 101 till when an ultrasonic wave reaches each microphone of the ultrasonic wave reception array unit 102.

The localization system further includes an object detection unit 104 which detects objects around the microphone array, and a position estimation unit 105 which calculates the position of the ultrasonic tag 200 from an arrival time at each microphone calculated by the propagation time calculation unit 103 and an object detection result while considering reflection of the ultrasonic wave. As described later, in the position estimation unit 105, the sound source position estimation unit has a reflection wave path estimation function for estimating a reflection wave path from a surrounding object identified by information from the object detection unit and the distance thereof, and a sound source position estimation function for estimating the position of the wound source according to the reflection wave path and the distance. Further, the ultrasonic tag 200 includes an ultrasonic wave transmission unit 201 which receives a radio wave transmitted from the radio wave transmission unit 101 and if the radio wave is an instruction to transmit an ultrasonic wave, transmits an ultrasonic wave.

The ultrasonic wave reception array unit 102 is formed of a microphone array including three or more microphones. Further, the object detection unit 104 has a relative position detection function for detecting shapes, positions, and relative positions with respect to the microphone array of objects reflecting ultrasonic waves, based on the surrounding environment where the microphone array and the sound source included in the ultrasonic wave reception array unit are placed. That is, the object detection unit 104 detects the structure of a surface of an object reflecting a ultrasonic wave in the environment where the microphone array and the ultrasonic tag 200 are placed, and a relative position with the microphone array. The objects include walls, furniture and other objects.

The object detection unit 104 can use and realize a method for performing shape measurement with a range sensor using laser beam and the like, a method for moving a range sensor (e.g., one utilizing laser light) capable of measuring a distance on a two-dimensional plane to thereby estimate a three-dimensional shape from the position and measurement result, a method for shape restoration by stereo view using a plurality of cameras, a method for shape restoration by means of a factorization method utilizing movement of cameras, and a method for shape restoration using gradation on object surface such as "shape from shading" from an image to a camera, for example. Further, the structure of a surface of an object and relative position with the microphone array can be calculated by using various sensors.

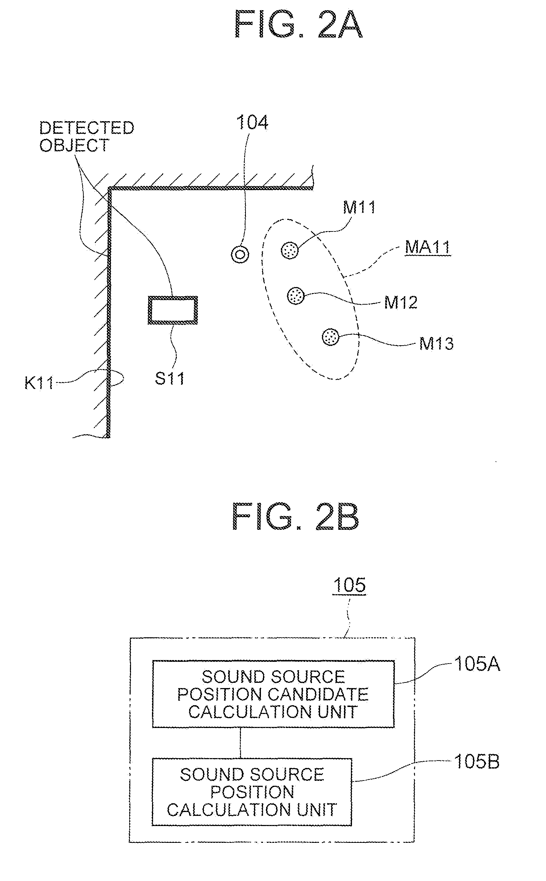

Fig. 2(A) is a diagram showing relative positions of an object and the microphone array detected by the object detection unit 104 shown in Fig. 1. As shown in Fig. 2(A), the structures of surfaces of an object S11 and a wall K11 and relative positions of the respective microphones M11 to M13 in a microphone array MA11 are detected by the sensor of the object detection unit 104.

Fig. 2(B) is an internal configuration diagram of the position estimation unit 105 shown in Fig. 1. The position detection unit 105 calculates the position of the ultrasonic tag 200 from object information detected by the object detection unit 104 and arrival time for each microphone calculated by the propagation time calculation unit 103 while considering reflection of ultrasonic waves. Further, as shown in Fig. 2(B), the position estimation unit 105 includes a sound source position candidate calculation unit (shortest reflection path calculation unit) 105A which calculates, as a candidate area of the ultrasonic tag 200, an area where a shortest path length of an ultrasonic wave corresponds to a time lag calculated by the propagation time calculation unit 103 while considering reflection for each microphone configuring the microphone array by using object information, and a sound source position calculation unit 105B which calculates the position of the ultrasonic tag 200 from the relationships among candidate areas acquired for the respective microphones.

[Operation]

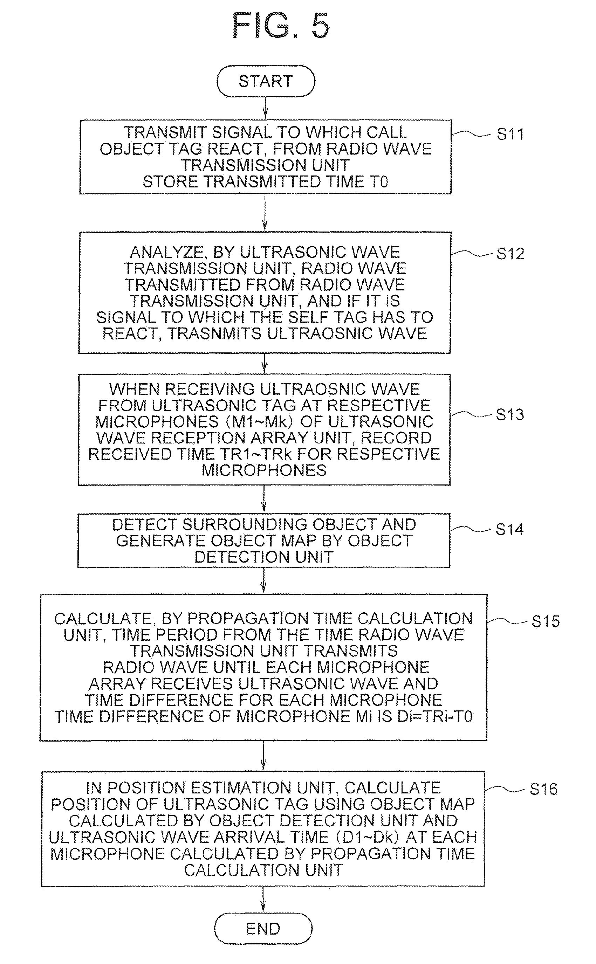

Next, operation of the localization system as shown in Fig. 1 will be described based on the flowchart of Fig. 5.

First, the radio wave transmission unit 101 transmits a signal to which the ultrasonic tag 200, or a call object, responds (radio wave transmission step). At this time, the transmission time is stored as T0 (step S11). Then, the ultrasonic wave transmission unit 201 provided to the ultrasonic tag 200 side analyzes the radio wave transmitted from the radio wave transmission unit 101, and transmits an ultrasonic wave if it is a signal to which the self ultrasonic tag 200 has to respond (step S12). The time period from when the ultrasonic wave transmission unit 2o1 receives the radio wave till when it transmits the ultrasonic wave needs to be almost constant, and the time interval from the reception of the radio wave to the transmission of the ultrasonic wave is preferably minute.

Note that the radio wave transmission unit 101 may be configured such that the procedures of radio wave transmission operation is programmed as a transmission operation controlling function which is to be executed by a computer.

Next, when respective microphones of the ultrasonic wave reception array unit 102 (assumed to be composed of n pieces of microphones M11 to M1n) receive an ultrasonic wave from the ultrasonic tag 200, received times TR1 to TRk are recorded for respective microphones (step S13: ultrasonic wave reception step).

Then, the object detection unit 104 detects the positional information and the information regarding shapes, sizes, and the like of objects present around the microphones M11 to M1n, and generates an object map (step S14: surrounding object detection step). That is, as it is necessary to have positional relationships between objects and the microphone array from when the ultrasonic wave is transmitted from the ultrasonic tag 200 till when the ultrasonic wave reaches to each microphone, and object shapes, if in the environment where the microphone arrays and objects are standstill for example, a process of generating this object map can be performed in advance. If it is not the case, this may be realized by procedures in which a process of generating an object map is performed at the same time as transmission and reception of the ultrasonic wave.

The surrounding object detection step at step S14 includes an object information storing step for detecting present positions, shapes, and sizes of surrounding objects present around the microphone array beforehand and storing then as surrounding map information, and an object map generation step for generating an object map for identifying relative positions with the surrounding objects viewed from the respective microphones configuring the microphone array based on the stored surrounding map information. By performing these steps, the object map is generated.

Note that the surrounding object detection step may be configured such that the performing contents are programmed as a surrounding object identifying function which is to be executed by a computer.

Next, the propagation time calculation unit 103 calculates for each microphone a time difference from the time that the radio wave transmission unit 101 transmits a radio wave until each of the microphone array receives an ultrasonic wave. For example, a time difference between transmission and reception of a microphone $M_i$ is set to be "$D_i = TR_i - T_0$" (step S15). The difference D1 calculated here is a time interval from the time that an ultrasonic wave is transmitted from the ultrasonic wave transmission unit 201 until the ultrasonic wave reaches each of the microphones configuring the ultrasonic wave reception array unit 102. As such, if the time lag g from the time that the ultrasonic tag 200 side receives a radio wave until the time that it transmits an ultrasonic wave is long, it is necessary to subtract the time lag g to be "$D_i = TR_i - T_0 - g$" (propagation time calculation step).

Now, the propagation time calculation step for calculating the time period from when the radio wave transmission unit 101 transmits a radio wave till when each microphone of the microphone array receives an ultrasonic wave may be formed as a program which is to be executed by a computer as a propagation time calculation function.

Next, the position estimation unit 105 calculates the position of the ultrasonic tag (sound source) 200 as shown below using the object map calculated by the object detection unit 104 and the ultrasonic wave arrival times (D1 to Dn) of respective microphones calculated by the propagation time calculation unit 103 (step S16: sound source position estimation step).

(Sound Source Position Calculating Process)

Now, a position calculating process of the ultrasonic tag 200 performed by the position estimation unit 105 will be described by way of an example with reference to a flowchart.

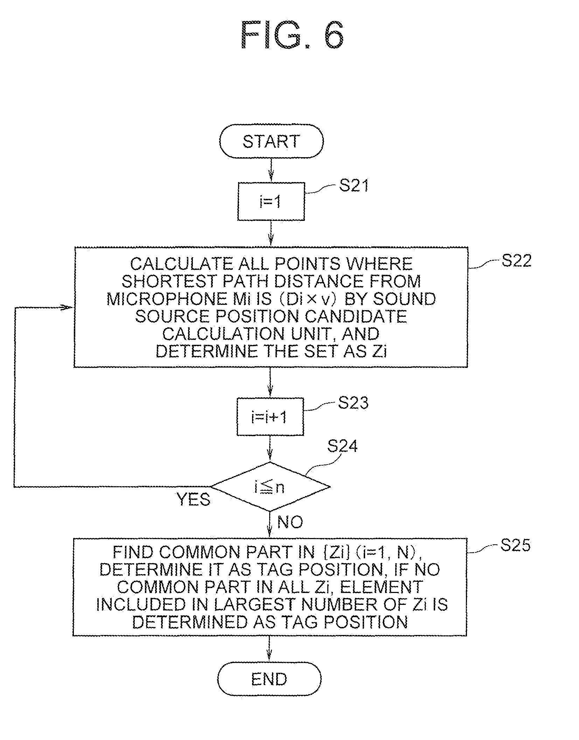

Fig. 6 shows a flowchart of a position calculation process of the ultrasonic tag 200 performed by the position estimation unit 105 shown in Fig. 2(B).

In Fig. 6, for a case where the microphone $M_i$ is a microphone M1 (step S21), the sound source position candidate calculation unit 105A calculates all points where the shortest path distance between the microphone $M_i$ and the ultrasonic tag 200 is $D_i * v$, and a set of the points is determined as $Z_i$ (step S22), where the symbol v represents a sound velocity.

Next, where $i = i + 1$, for a case where the microphone $M_i$ is a microphone M2 and a case where the microphone $M_i$ is a microphone M3, the sound source position candidate calculation unit 105A sequentially calculates all points where the shortest path distance between the microphone $M_i$ and the ultrasonic tag 200 is $D_i * v$, determines a set of the points as $Z_i$ (step S23), and regarding all of the microphones M1 to Mn, calculates all points where the shortest path distance between the microphone $M_i$ and the ultrasonic tag 200 is $D_i * v$, determines a set of the points as $Z_i$ (step S24).

Next, the sound source position candidate calculation unit 105A finds a common element in all sets $\{Z_i\}$ $\{i=1, ---, n\}$, and determines the element as the position of the ultrasonic tag 200. If there are a plurality of common elements, the position of the ultrasonic tag 200 is estimated from the elements. The methods for estimation include a method in which the center of gravity of the common elements is set as the position of the ultrasonic tag 200, and a method in which the common elements are clustered by their positions and the position of the center of gravity of a cluster having the maximum elements is set as the position of the ultrasonic tag 200.

Further, if there is no common element in all of the sets {Zi} (i=1, ---, n), an element included in the largest number of sets may be determined as the position of the ultrasonic tag 200 (step S25). In that case, the position of gravity of an element included in more than a certain number of sets may be determined as the position of the ultrasonic tag 200.

(Exemplary Operation of Position Estimation Unit)

Next, an exemplary embodiment of the part calculating the shortest path distance in the exemplary operation of the position estimation unit 105 will be described.

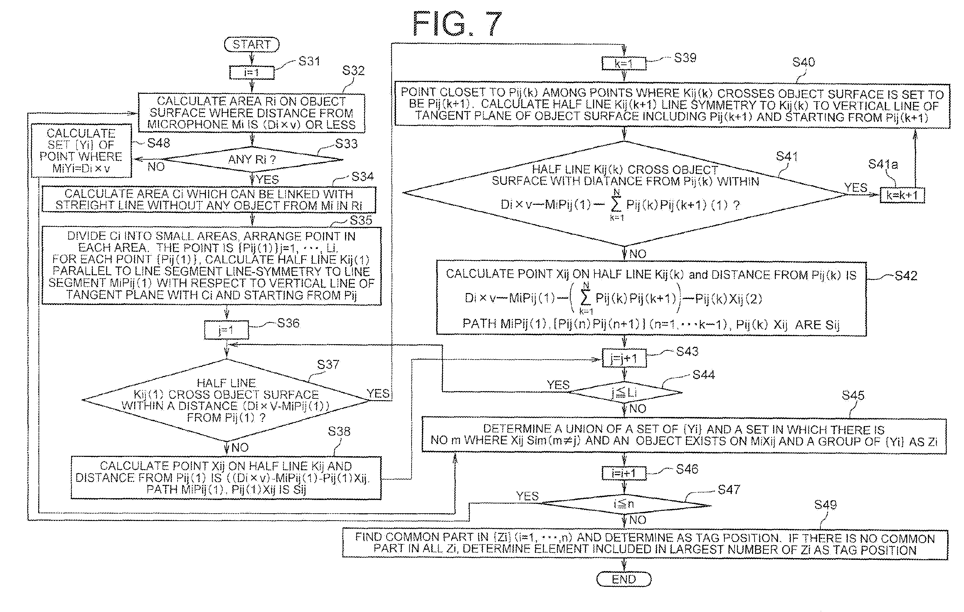

Fig. 7 is a flowchart showing an operating flow of the position estimation unit 105 shown in Fig. 2(B) calculating the shortest path distance. In steps S31 to S48 of Fig. 7, processing of steps S21 to S24 which is processing by the sound source position candidate calculation unit 105A shown in Fig. 6 will be performed. Further, in step S49 of Fig. 7, processing of the part estimating the position shown in Fig. 6 (that is, process of step S25) will be performed.

In the flowchart of Fig. 7, in the case where the microphone No. is i=1, an area R1 on the object surface where the distance from the first microphone M1 is D1*v or less is obtained (step S31), and for each of the microphones Mi, an area Ri on the object surface where the distance from the microphone is Di*v or less is obtained, sequentially (step S32). Here, the signal v represents a sound velocity.

Next, it is determined whether or not there is an area Ri (step S33), and if there is no area Ri (No in step S33), a set {Yi} of points where "MiYi=Di*v" is calculated (step S48), and the processing goes to step S45. That is, in "{Xij}j=1, ---, Li" processing of setting a union of a set in which there is no m where Xij∈Sim(m≠j) and an object exists on MiXij and a set of {Yi} as Zi (step S45).

On the other hand, if an area Ri exists in step S33 (Yes in step S33), an area Ci where a line can be taken from the microphone Mi without interrupted by an object within the area Ri is obtained (step S34). Next, the area Ci is divided into small areas, and points are arranged in the respective areas. Then, the points are set to be "{Pij(1)}j=1, ----, Li". For each of the points {Pij(1)}, a half line Kij(1) which is parallel to a line segment which is line-symmetry to a line segment MiPij(1) relative to a perpendicular line of a tangent plane with the area Ci and starts from Pij is calculated (step S35).

Next, beginning from j=1 (step S36), for each of the points "{Pij(1)}j=1, ----, Li", it is determined whether the half line Kij(1) crosses an object surface with a distance from Pij(1) being within "Di*v-MiPij(1)" (step S37).

If the half line Kij(1) does not cross an object surface, a point Xij which is on the half line Kij and has a distance of "(Di*v)-MiPij(1)-Pij(1)Xij" from Pij(1). Note that the path MiPij(1) and Pij(1)Xij are set to be Sij (step S38).

Meanwhile, if the half line Kij (1) crosses an object surface in step S37 (Yes in step S37), beginning from k=1, a point closest to the Pij(1) among the points that the half line Kij(1) crosses an object surface is set to be Pij(2), and a half line Kij(2) which is line-symmetry to Kij(1) relative to the perpendicular line of a tangent plane of the object surface including the Pig(2) and starts from the Pij (2) is calculated (step S40).

Next, it is determined whether the half line Kij(2) crosses an object surface when a distance from Pij(2) is equal to or less than a value expressed by the following expression (1) (step S41), and if it crosses an object surface (Yes in step S41), it is set that k=k+1 (step S41a) and returns to step S40, and then, among the points that the half line Kij (k) crosses the object surface, a point closest to Pij(k) is set to be Pij(k+1), and a half line Kij(k+1) which is line symmetry to Kij (k) relative to a perpendicular line of a tangent plane of the object surface including Pij(k+1) and starts from Pij (k+1) is calculated (step S40).

[Expression 1]

$$Di \times v - MiPij(1) - \sum_{k=1}^{N} Pij(k)Pij(k+1) \quad \cdots \quad (1)$$

On the other hand, if the half line Kij(2) does not cross the object surface when the distance from Pij(2) is equal to or less than a value expressed by the formula (1) in the determination of step S41 (No in step S41), a point Xij which is on the half line Kij(k) and the distance from Pij(k) is expressed by the following expression (2) is calculated. Note that the path MiPij(1), {Pij(n)Pij(n+1)}(n=1, --- k-1), Pij(k)Xij are set to be Sij (step S42).

[Expression 2]

$$Di \times v - MiPij(1) - \left( \sum_{k=1}^{N} Pij(k)Pij(k+1) \right) - Pij(k) \times Xij \quad \cdots \quad (2)$$

In this manner, addition is sequentially performed with j=j+1 (step S43), and when j reaches Li and processing of steps S37 to S43 has been completed for all "{Pij(1)}j=1, ···, Li" (step S44), and a union of a set of {Yi} and a set in which there is no "m" satisfying "Xij∈ Sim(m≠j)" in "{Xij}j=1, ···, Li" and an object is present on MiXij is determined as Zi (step S45).

Next, addition is sequentially performed with i=i+1 (step S46), and after processing for all of the microphones M1 to Mn has been performed (step S47), a common part in {Zi}(i=1, ..., n) is searched, and the common part is determined as a present position of a ultrasonic tag. At this time, if there is no common part for all Zi, an element included in the largest number of Zi is determined as a present position of an ultrasonic tag (step S49).

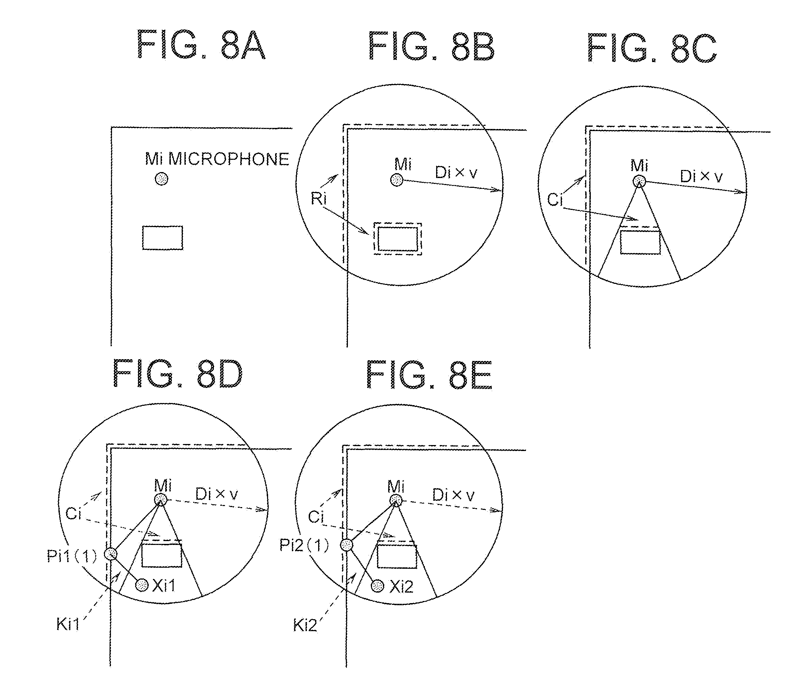

Fig. 8 is a schematic diagram showing a progress of an algorithm in the flowchart of an operation calculating a shortest path distance by the position estimation unit 105 disclosed in Fig. 7.

When a microphone Mi and an object S11 are present on a plane as shown in Fig. 8(a), an area Ri on an object surface where the distance from the microphone Mi is (Di*v) or less is calculated as shown in Fig. 8(b). Next, as shown in Fig. 8(c), an area Ci where the object S11 is not present so that a line can be drawn from the microphone Mi without interruption is calculated from the area Ri.

Then, as shown in Fig. 8(d), the area Ci is divided into small areas, and a point is set within the area. With the point being Pi1(1), a half line Ki(1) which is a line segment and is line symmetry relative to the perpendicular line of a tangent plane with the area Ci and starts from Pi1(1) is calculated, and the leading end of the half line Ki(1) is calculated as a point Xi1.

Similarly, as shown in Fig. 8(e), the area Ci is divided in to small areas and another point is set within the area. Then, the other point being Pi2(1), a half line Ki(2) which is a line segment and is line symmetry relative to a perpendicular line of a tangent plane with the area Ci and starts from Pi2(1) is calculated, and the leading end of the half line Ki(2) is calculated as a point Xi2.

Based on the points "Xi1, Ci2, ---, Xin" calculated in this manner, a union of a set of {Yi} and a set in which there is no "m" satisfying "Xij∈ Sim(m≠j)" and an object is present on MiXij is determined as Z1, and a common part in {Zi}{i=1, ..., n) is searched, and the part is determined as a present position of an ultrasonic tag (sound source).

Now, the step of estimating the position of the sound source described above, that is, the step of estimating the reflection propagation path of the ultrasonic wave based on the positional information of the surrounding object having been detected and identified around the microphone array MA11 and the propagation time for each of the microphones calculated in the propagation time calculation step, and estimating the position of the ultrasonic tag (position of the sound source) may be configured such that the content of performance is programmed and executed by a computer.

As described above, in the first exemplary embodiment, the arrangement status of an object present around the microphone array is recognized using a distance measuring device such as an LRF (Laser Range Finder), and by considering reflection of an ultrasonic wave generated due to the arrangement states of the object, candidate areas where the ultrasonic tag may be present are calculated from the respective positions of the microphones in the microphone array, and an area where the candidate areas in which the ultrasonic tag (sound source) is present, calculated from the respective microphones, are overlapped with one another is set to be a present position of the ultrasonic tag. Thereby, the three-dimensional position of the ultrasonic tag can be calculated with higher accuracy than the case where reflection by the object is not considered.

As such, it is possible to provide a localization system capable of measuring the position using an ultrasonic tag, that is, the positional relationship between the ultrasonic tag and microphones, with high accuracy even in a room where reflection of ultrasonic waves by objects frequently occurs, and a robot and a localization method utilizing the localization system, and a program for calculating the sound source position thereof.

[Second Exemplary Embodiment]

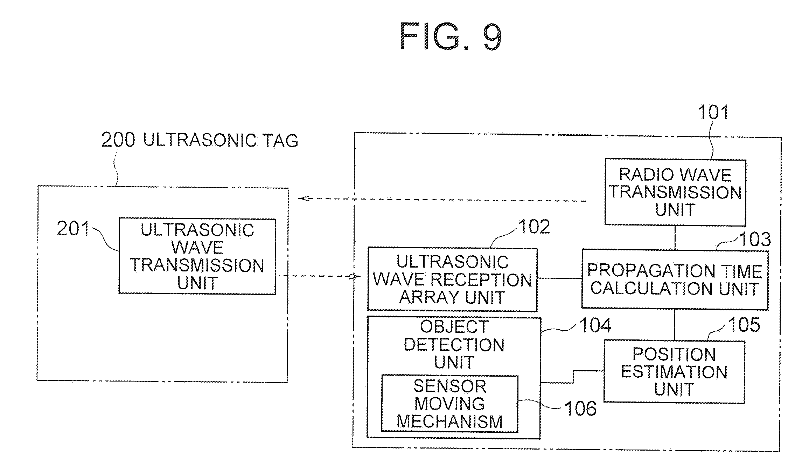

Next, a second exemplary embodiment will be described based on Fig. 9.

The second exemplary embodiment shown in Fig. 9 differs from the first exemplary embodiment in that the object detection unit 104 includes an object detection sensor and a sensor moving mechanism 106 for moving the object detection sensor.

As shown in Fig. 9, the localization system of the second exemplary embodiment adopts a method in which the sensor moving mechanism 106 of the object detection unit 104 detects various kinds of information regarding surrounding objects in a plurality of locations, the object detection unit 104 processes them and creates an object map, and performs localization using the created object map. By considering movement of the objects, it is possible to generate an object map of a wider area than that the object detection unit 104 can sense at once. Note that an exemplary embodiment of the sensor moving mechanism 106 may be a configuration in which the whole or a part of the sensor portion of the object detection unit 104 is moved.

In other words, the object detection unit 104 includes a sensor for detection surrounding objects and the sensor moving mechanism 106 for moving the sensor, and further, a surrounding map creating function for creating a surrounding object map by detecting surrounding objects in a plurality of locations based on the operation of the sensor moving mechanism 106, and an object position identifying function for identifying positions of the objects using the created surrounding object map as described below.

Other configurations are the same as those of the first exemplary embodiment described above.

(Operation)

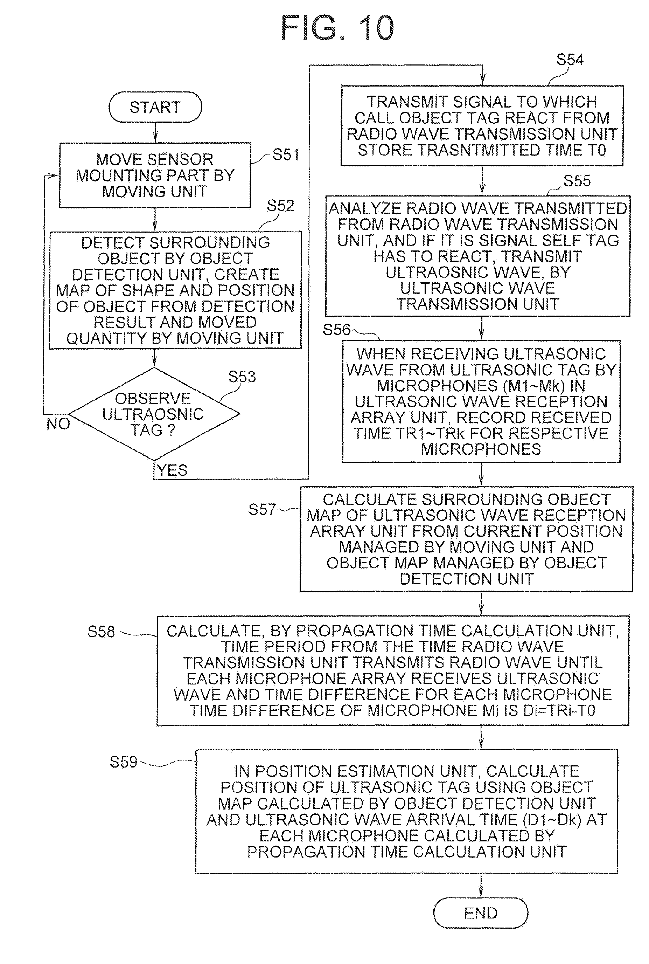

Next, operation of the system according to the second exemplary embodiment will be described based on Fig. 10. In Fig.10, a part where a sensor is mounted is moved to a desired position by the sensor moving mechanism 106 (step S51). In this case, only a sensor part of the sensor moving mechanism 106 provided to the object detection unit 104 may be moved.

By moving the sensor, positional information and information about shape and size of objects present around the microphones M11 to M1n are detected, and an object map is created (step S52: surrounding object detection step).

In this case, the surrounding object detection step in the step S52 includes an object information storing step and an object map generation step. In the object information storing step, the positions, shapes and sizes of surrounding objects present in a wide area around the microphone array are detected beforehand and the detection result and the sensor movement amount are stored as surrounding map information, and in the object map creation step, an object map for identifying relative positions of the surrounding objects viewed from the respective microphones configuring the microphone array is generated based on the stored surrounding map information. With these steps being carried out, an object map is generated.

Note that the object information storing step and the object map generation step described above may be configured such that the performance contents are programmed so as to be executed by a computer.

Specific methods of creating a surrounding map for the surrounding objects include a method combining a self position identifying technique of the sensor moving mechanism 106 and an object detection technique and a method of creating a map utilizing SLAM (Simultaneous Localization And Mapping).

Then, whether to observe an ultrasonic tag is determined (step S53). Conditions on which the determination of this step is made include a method of carrying out observation of the ultrasonic tag at predetermined times, a method of determining whether to carry out observation of the ultrasonic tag according to the state of creating a map (for example, observing the ultrasonic tag when a map is created with a sufficient area), and a method of determining whether to carry out observation of the ultrasonic tag according to a request by the user.

Next, after creating the object map by repeating the above-described processing of steps S51 to S53, processing which is almost the same as that of steps S11 to S16 in the flowchart of Fig. 5 disclosed in the first exemplary embodiment is performed. Specifically, the radio wave transmission unit 101 transmits a signal to which the ultrasonic tag 200 of the calling object responds. At this point, the transmitted time is saved as T0 (step S54). Then, the ultrasonic wave transmission unit 201 present on the ultrasonic tag 200 side analyzes the radio wave transmitted from the radio wave transmission unit 101, and if it is a signal to which the self ultrasonic tag 200 has to responds, the ultrasonic wave transmission unit 201 transmits an ultrasonic wave (step S55).

Next, when the respective microphones (including n pieces of microphones M11 to M1n) of the ultrasonic wave receiving array unit 102 receives the ultrasonic wave from the ultrasonic tag 200, reception times TR1 to TRk are recorded for the respective microphones (step S56). Further, the object detection unit 104 detects objects present around the ultrasonic wave receiving array unit 102 from the current position managed by the sensor moving mechanism 106 and the object map managed by the object detection unit 104, and identifies an object map (step S57). In other words, the object detection unit 104 has the surrounding map creation function described above, and in addition, an object position identifying function for identifying the positions of the surrounding objects by using the surrounding object map created by the surrounding map creation function.

Then, the propagation time calculation unit 103 calculates, for the respective microphones, a difference between times from when the radio wave transmission unit 101 transmits a radio wave till when each of the microphone array receives an ultrasonic wave. For example, a time difference between transmission and reception for a microphone Mi is assumed to be "Di=TRi-T0" (step S58). Further, the position estimation unit 105 calculates the position of the ultrasonic tag (sound source) 200 with use of the object map calculated by the object detection unit 104 and the ultrasonic wave arrival times (D1 to Dn) at the respective microphones calculated by the propagation time calculation unit 103 (step S59).

In this way, the same operation effects as those of the first exemplary embodiment can be achieved, and further, by considering the movement of the objects in this manner, it is possible to generate an object map of a wider range than the range that the object detection unit 104 can sense at once as described above, whereby the position of the ultrasonic tag 200 which is the sound source is calculated as described above.

Further, as the sensing range of various sensors (e.g., laser range finder and images) used for object detection does not reach objects located at distant areas from the sensor, it is impossible to sufficiently detect objects present in a space, where an ultrasonic tag is used, by sensing from only one location. According to the above-described localization system, however, as the shapes of objects in an area hidden behind another object can be detected, it is possible to calculate the paths of ultrasonic wave reaching from the ultrasonic tag to the microphone array with higher accuracy. As such, by detecting objects within a larger range, it is possible to accurately estimate the ultrasonic wave from the ultrasonic tag is reflected at various objects. Thereby, localization of the ultrasonic tag (sound source) can be performed with higher accuracy.

[Third Exemplary Embodiment]

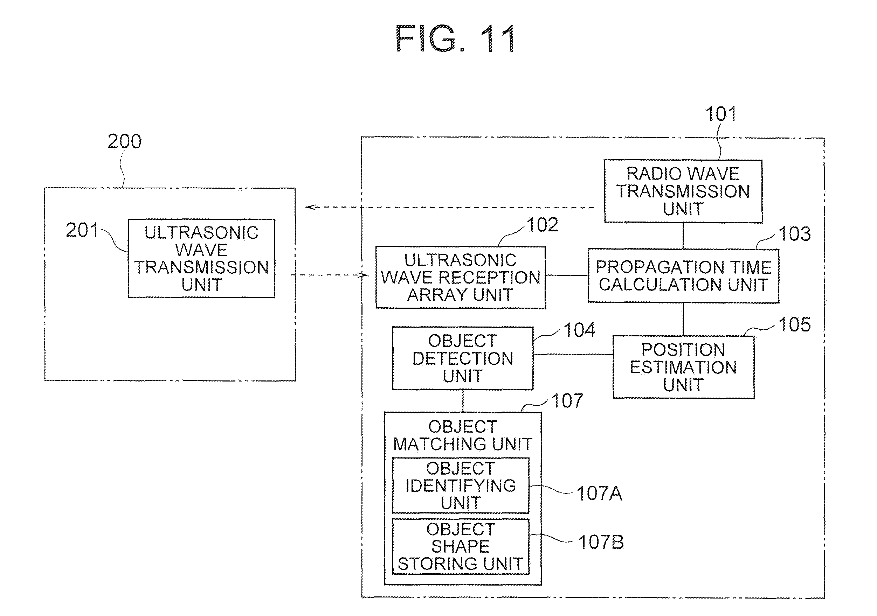

Next, a third exemplary embodiment will be described based on Fig. 11.

The localization system according to the third exemplary embodiment disclosed in Fig. 11 is characterized as to include, in addition to the configuration of the first exemplary embodiment shown in Fig. 1, a surrounding object identifying function for previously detecting what the surrounding objects K11 and S11 are, and an object matching unit 107 which stores the detection result in the memory and transmits the shape of a stored surrounding object to the object detection unit 104 corresponding to a request from the outside.

Further, the object detection unit 104 has a function of creating an object map for identifying objects in an area which is outside the sensor measuring range by using the object shape information provided from the object matching unit 107.

Here, the object matching unit 107 includes an object identifying unit 107A for identifying objects and an object shape storing unit 107B for storing object shapes. The object identifying unit 107A identifies an object placed near the ultrasonic microphone array and the ultrasonic tag as a certain object, from among the objects whose shapes are stored in the object shape storing unit 107B. More specifically, the object shape storing unit 107B detects and identifies various tags such as RFID tags, ultrasonic tags, and image markers attached to the objects, or identifies objects by image matching with use of a camera.

Further, the object shape storing unit 107B stores an outer shape diagram of objects required for estimating reflection of the ultrasonic wave at object surfaces, and uses the diagram for reflecting the shape information on the object map in the measurement environment if the position and orientation of an object can be recognized. Further, it is also possible that the object matching unit 107 calculates the position and the orientation of an object and transmits them to the object detection unit 104.

Note that methods for detecting the position and the orientation of an object include a method of detecting the position and the orientation of an object with use of tags such as RFID tags, ultrasonic tags, and image markers, and a method of detecting the position and the orientation by processing images obtained from a camera. More specifically, in the case of a method of using RFID tags, there is a method in which the position and the orientation are detected with a plurality of RFID tags being attached to an object beforehand. Meanwhile, in the case of using images obtained from a camera, there is a method in which matching with object shapes registered beforehand is performed.

Next, operation of the localization system of the third exemplary embodiment shown in Fig. 11 will be described with reference to the flowchart.

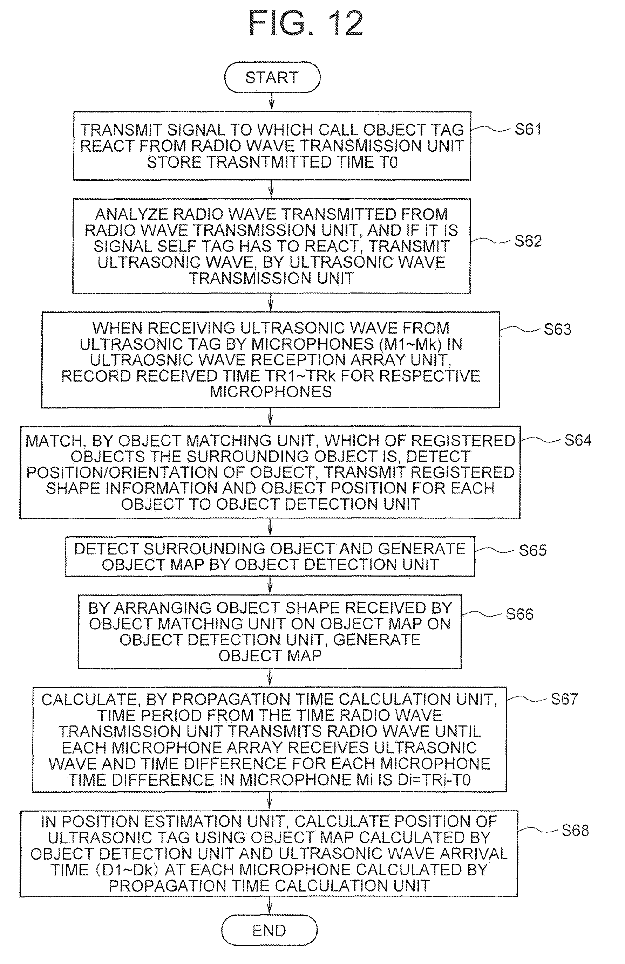

Fig. 12 is a flowchart showing the operational flow of the localization system according to the third exemplary embodiment shown in Fig. 11. In the localization system of the third exemplary embodiment, first, the same processing as that of steps S11 to 13 of a flowchart of the first exemplary embodiment shown in Fig. 5 is performed. Specifically, the radio wave transmission unit 101 transmits a signal to which the ultrasonic tag 200 of the calling object responds. At this point, the transmission time is stored as T0 (step S61).

Next, the ultrasonic wave transmission unit 201 present on the ultrasonic tag 200 side analyzes the radio wave transmitted from the radio wave transmission unit 101, and if it is a signal to which the self ultrasonic tag 200 has to respond, the ultrasonic wave transmission unit 201 transmits an ultrasonic wave (step S62). Further, when the respective microphones (consisting of n pieces of microphones M11 to M1n) of the ultrasonic wave receiving array unit 102 receive the ultrasonic wave from the ultrasonic tag 200, the reception times TR1 to TRk for the respective microphones are recorded (step S63).

Next, processing unique to the localization system in the third exemplary embodiment is performed. That is, the object matching unit 107 matches a surrounding object with one of the previously registered objects, and further, detects the position of the object, and transmits the previously registered shape information of respective objects and the position and the orientation of the object to the object detection unit 104 (step S64).

Then, the object detection unit 104 detects surrounding objects and generates an object map (step S65).

Further, the object detection unit 104 arranges the object shape received from the object matching unit 107 on the object map to thereby generate the object map (step S66: object map generation step). Through these steps, it is possible to detect objects which may not be detected by the sensor of the object detection unit 104 due to occlusion or the like of the object itself.

Then, the same processing as that of steps S15 to S16 of a flowchart of the first exemplary embodiment shown in Fig. 5 is performed, whereby the position of the ultrasonic tag 200 (position of the sound source) is calculated. Specifically, the propagation time calculation unit 103 calculates a time difference between the time that the radio wave transmission unit 101 transmits a radio wave and the time that each of the microphone array receives an ultrasonic wave, for each of the microphones. For example, the time difference between transmission and reception of the microphone Mi is assumed to be "Di=TRi-T0" (step S67). Next, the position estimation unit 105 calculates the position of the ultrasonic tag 200 (position of the sound source) with use of the object map calculated by the object detection unit 104 and the ultrasonic wave arrival times (D1 to Dn) of the respective microphones calculated by the propagation time calculation unit 103 (step S68).

As described above, according to the exemplary embodiment, the object matching unit identifies objects present in each environment, and with use of the shape information previously stored in the object matching unit 107, an object map is generated by estimating the object shape of areas which cannot be sensed directly.

With this configuration, the area required to be directly sensed by the object detection unit 104 can be reduced. Consequently, the time required for sensing can be reduced by reducing the area required to be directly sensed, and as the range where objects have to be sensed can be reduced, sensing of objects can be performed more effectively.

As described above, the respective exemplary embodiments are configured such that the object detection unit 104 effectively works to recognize the arrangement status of the surrounding objects S11 and K11 present around the microphones M11 to M13, and while considering refection of the ultrasonic wave generated according to the arrangement states, calculates the candidate areas where the ultrasonic tag may be present based on the respective positions of the microphones M11 to M13 in the microphone array AM 11.

Further, an area A14, in which the candidate areas calculated for the respective microphones where the ultrasonic tag T11 may be present overlap with one another, is set to be the present position of the ultrasonic tag (sound source). As such, it is possible to acquire the three-dimensional position of the sound source such as an ultrasonic tag with higher accuracy, for example, than the case of not considering reflection by the surrounding objects, whereby it is possible to provide a localization system having an excellent advantage that localization of the sound source such as the positional relationship between the ultrasonic tag T11 and the microphones M11 to M13 can be measured with high accuracy even in a room where reflection of ultrasonic waves by objects is frequently caused, and a robot and a localization method using the localization system, and a program for calculating the position of the sound source.

The exemplary embodiments of the present invention may be configured as described below.

By acquiring the shapes of the objects located around the microphone array and the ultrasonic tag by the object detection unit, it is possible to calculate the shortest paths from the ultrasonic wave transmission unit provided to the ultrasonic tag to the respective microphones by considering reflection of the sound wave to those objects. With this configuration, by observing the elapsed time from when the sound wave is transmitted from the ultrasonic wave transmission unit till when it reaches each of the microphones, candidate areas where the ultrasonic tag may be present when the sound wave reaches in the elapsed time can be calculated at real time.

More specifically, although a candidate area where the ultrasonic tag may be present becomes a sphere about a microphone with a radius of a length obtained by multiplying the elapsed time by the acoustic velocity if there is no obstacle. However, if there is an obstacle (that is, object), candidate areas would generally be a combination of a plurality of plane present inside the sphere. In that case, by detecting the object shape by the object detection unit, the candidate areas can be estimated. In this way, as candidate areas where the ultrasonic tag may be present are estimated for respective microphones configuring the microphone array are estimated by the position estimation unit described above, and as the ultrasonic tag is present in a shared part of the respective candidate areas, the three-dimensional position of the ultrasonic tag can be accurately calculated.

Further, the object detection unit may be configured to have a relative position detecting function for detecting the shapes and positions of objects reflecting an ultrasonic wave and the relative positions of the objects with the microphone array based on the microphone array included in the ultrasonic wave reception array unit and the surrounding environment where the sound source is provided.

With this configuration, as the shapes and positions of the reflection objects and the relative positions with the microphone array become clear by the relative position detecting function, the propagation path of an ultrasonic wave can be estimated with high accuracy, whereby accuracy in estimating the position of the sound source can be significantly improved based on the relationship with the position of the respective microphones.

Further, the position estimation unit may be configured to include a shortest reflection path calculation unit (sound source position candidate calculation unit) for estimating reflection paths using information of the object for the respective microphones configuring the microphone array included in the ultrasonic wave reception array unit and acquiring areas where the shortest path lengths of the ultrasonic wave correspond to the times calculated by the propagation time calculation unit as candidate areas of the ultrasonic wave transmission unit, and a sound source position calculation unit for calculating the position of the sound source from the relationship between the candidate areas acquired for the respective microphones.

With this configuration, as the shortest reflection path calculation unit and the sound source position calculation unit works together, an advantage that identification of the position of the sound source can be performed faster is achieved.

Further, the object detection unit may be configured to measure and detect the position and the shape of an object, by using at least one of; a method of performing shape measurement by a range sensor using laser light; a method of estimating a three-dimensional shape from the positions of the surrounding objects and the observation result by functioning a range sensor capable of performing range measurement on a two-dimensional plane; a method of restoring the shape by stereo view using a plurality of cameras; a method of restoring the shape by the factorization method using the movement of a camera; and a method of restoring the shape from gradation of the object surface using images captured by a camera.

With this configuration, all of the numbers, shapes, positions and the sizes of the surrounding objects can be visually recognized, whereby estimation and confirmation of the shortest reflection paths can be performed easily. As such, an advantage that the positional calculation of the sound source can be performed more accurately is achieved.

Further, the object detection unit is characterized as to include a sensor for defecting surrounding objects and the sensor moving function for moving the sensor, and also the surrounding map creating function for creating a surrounding object map by detecting surrounding objects at a plurality of locations based on the operation of the sensor moving mechanism, and the object position identifying function for identifying the positions of the objects using the created surrounding object map.

This configuration provides an advantage that presence of surrounding objects can be recognized for a wider range, and particularly, even objects which are present behind a large object can be recognized accurately.

As the localization system has the sensor moving mechanism and the object detection unit considering the movement, detection of objections can be performed for a wider range. For example, although a range finder generally used for detecting objects can observe up to objects located before the measuring part (in the case of a laser range finder, laser light transmission unit and receiving unit) of the range finder, there is a problem of occlusion that the states of objects located over such object cannot be observed. Accordingly, if detection of objects is performed with the sensor being fixed, objects present in the environment cannot be sufficiently observed. As such, by observing objects in an area hidden by the front object while moving the sensor with the sensor moving mechanism as the localization system of the present invention, observation of objects can be performed for a wider range, wherein reflection propagation paths of a ultrasonic wave can be estimated with higher accuracy.

Further, it is also acceptable that the object detection unit also has an object matching unit which detects what the surrounding objects are and transmits shape information regarding stored surrounding objects upon request, and that the object detection unit has a measurement range outside map creating function for creating an object map for the surrounding objects in an area outside of the measurement range of the sensor provided to the object detection unit using the shape information from the object matching unit.

With this configuration, as presence of surrounding objects are identified beforehand on an object map, there is no need to directly sense the surrounding objects, providing an advantage that the shortest propagation path from the sound source to each of the microphones can be estimated faster, so that the position of the sound source can be identified more rapidly.

Further, the object matching unit may be configured as to include a function of detecting tags such as RFID tags, ultrasonic tags, and image markers attached to objects, acquiring information for identifying the surrounding objects to which those tags are attached based on information of the detected tags, and transmitting the information to the object detection unit.

Further, the object matching unit may be configured as to include a function of identifying surrounding objects by performing image matching, and transmitting image information regarding the surrounding objects to the object detection unit.

Further, the object matching unit may be configured as to include a function of detecting the tags such as RFID tags, ultrasonic tags and image markers attached to the objects, identifying the positions and orientations of the objects based on information obtained from the tags, and transmitting information regarding the identified surrounding objects to the object detection unit.

Further, the object matching unit may be configure as to include, if at least one of RFID tags, ultrasonic tags, and image markers is set as the type of tag and multiple pieces of the tags are attached to the surrounding objects, a function of identifying the positions and the orientations of the surrounding objects by detecting the positions of the attached tags, and transmitting information regarding the identifying surrounding objects to the object detection unit.

Further, the object matching unit may be configured as to detect the positions and the orientations of the objects by matching the shape of the objects observed by the object detection unit.

With this configuration, accuracy of the object map can be improved by detecting objects located around the microphones and the ultrasonic tags by the object matching unit, and using the shape information of the object stored in the object matching unit. For example, by arranging the shapes of the objects stored in the object matching unit on the object map, it is possible to estimates shapes of parts that the sensor cannot be observed due to occlusion or the like. Generally, it is often difficult to observe all objects present in the environment with a sensor for detecting objects because of problems of occlusion, observation ranges, and accuracy. As such, by storing shapes of objects in the object matching unit beforehand as the localization system of the exemplary embodiment, it is possible to effectively acquire the shapes of the objects present in the environment without observing all shapes of the objects each time.

Further, the localization system may be configured as to be mounted on a robot for searching objects.

Further, it is also possible to include a sound source estimation step for calculating the position of the ultrasonic tag by estimating reflection propagation paths of the ultrasonic wave based on the positional information of the surrounding objects detected and identified beforehand regarding the surrounding objects present around the microphone array and the propagation time for each of the microphones calculated in the propagation time calculation step, and estimating the position of the sound source.

This configuration provides advantages that a sound source (e.g., object to be delivered with an ultrasonic tag) in which the position thereof is not identified can be detected and recognized at real time, searching for the sound source can be performed continuously, and the positions can be identified even for the case of a plurality of sound sources.

Note that before the radio wave transmission step is performed, a surrounding object detection step for detecting surrounding objects present around the microphone array and generating an object map may be provided.

Further, the surrounding object detection step may be configured as to include an object information storing step for storing the positions, shapes and sizes of the surrounding objects present around the microphone array as surrounding map information, and an object map generation step for generating an object map for identifying the relative positions of the surrounding objects viewed from the respective microphones configuring the microphone array based on the stored surrounding map information.

Further, the object map generation step in the surrounding object detection step may be configured such that shape information of the objects corresponding to the surrounding objects may be taken out from the object matching unit which detects and stores the positions, shapes and sizes of the surrounding objects present around the microphone array beforehand, and arranged on the identified object map.

With this configuration, as the surrounding objects have been identified in any cases, an object map can be identified rapidly and easily. Thereby, even for a sound source that the position thereof is not identified, estimation of the sound propagation paths and identification of the positions can be performed rapidly with high accuracy.

Note that for performing the position estimation computing function, the system may include a surrounding object identifying function for storing the positional information and the shape information of the surrounding object present around the microphone array which have been acquired by the object detection unit beforehand, and generating an object map based on the detection result, which is executed by the computer.

Further, the surrounding object identifying function may be configured as to include an object information storing function for, if information about the positions, shapes, and sizes of the surrounding objects present around the microphone array are detected by the object detection unit separately provided beforehand, storing this information in the form of surrounding map information, and an object map generating function for generating an object map in order to identify relative positions with the surrounding objects viewed from the respective microphones configuring the microphone array based on the stored surrounding map information.

Further, in the object map generating function, it is also acceptable to extracting shape information of objects corresponding to the surrounding objects from the object matching unit which detects and stores beforehand the positions, shapes and sizes of the surrounding objects present around the microphone array, and arranging the information on the object map, which is to be executed by the computer.

The above embodiments are provided for exemplary purposes, and the present invention is not limited to the scope of the embodiments shown in the drawings and may be changed in various ways within the scope of the claims.

While the present invention has been described with reference to embodiments (and examples) thereof, the present invention is not limited to these embodiments (and examples). Various changes in form and details, understood by those skilled in the art, may be made within the scope of the present invention.

This application is based upon and claims the benefit of priority from Japanese patent application No. 2006-233015, filed on August 30, 2006, the disclosure of which is incorporated herein in its entirety by reference.

INDUSTRIAL APPLICABILITY

The localization system of the present invention can be effectively used in public facilities such as an exhibition hall for configuring an optimum layout by measuring the arrangement relationship between exhibition.

## BRIEF DESCRIPTION OF THE DRAWINGS

Fig. 1 is a block diagram showing the configuration of a localization system according to the first exemplary embodiment of the invention.

Figs. 2(A) and 2(B) are diagrams showing the surrounding environment of the ultrasonic wave receiving array unit (microphone array) of the system disclosed in Fig. 1, and the position estimation unit for estimating the position of the sound source (ultrasonic tag) in such an environment, in which Fig. 2(A) is an illustration showing the relative position between the microphone array and the surrounding objects, and Fig. 2(B) is a block diagram showing the internal configuration of the position estimation unit.

Figs. 3(A) and 3(B) are diagrams showing the operating principle of the localization system according to the first exemplary embodiment of the invention, in which Fig. 3(A) is an illustration showing an exemplary positional relationship among the microphone array, the sound source (ultrasonic tag), and the surrounding objects, and Fig. 3 (B) is a schematic diagram showing a state where ultrasonic waves are emitted from the sound source (ultrasonic tag) in Fig. 3(A).

Fig. 4 is a schematic diagram showing candidate areas where an ultrasonic tag may be present when ultrasonic waves are emitted as shown in Fig. 3(B).

Fig. 5 is a flowchart showing the overall operation of the localization system disclose in Fig. 1.

Fig. 6 is a flowchart showing a flow of position calculating operation for an ultrasonic tag performed by the position estimation unit disclosed in Fig. 3.

Fig. 7 is a flowchart showing the operating flow by the position estimation unit shown in Fig. 3 acquiring the shortest path distances.

Fig. 8 is a schematic diagram showing progressing states (a) to (e) of the algorithm in the flowchart of Fig. 7.

Fig. 9 is a block diagram showing the configuration of a localization system according to the second exemplary embodiment of the invention.

Fig. 10 is a flowchart showing the operation of the localization system according to the second exemplary embodiment shown in Fig. 9.

Fig. 11 is a block diagram showing the configuration of a localization system according to the third exemplary embodiment of the invention.

Fig. 12 is a flowchart showing the operating flow of the localization system according to the third exemplary embodiment shown in Fig. 11.

Fig. 13 is a diagram showing a specific example in which a pathway of a sound wave from an ultrasonic tag is affected by an object.

## DESCRIPTION OF REFERENCE NUMERALS

| | |
|---|---|
| 101 | radio wave transmission unit |
| 102 | ultrasonic wave reception array |
| 103 | propagation time calculation unit |
| 104 | object detection unit |
| 105 | position estimation unit |
| 105A | sound source position candidate calculation unit (shortest reflection path calculation unit) |
| 105B | sound source position calculation unit |
| 106 | sensor moving mechanism (moving unit) |
| 107 | object matching unit |
| 107A | object identifying unit |
| 107B | object shape storing unit |
| 200 | ultrasonic tag (sound source) |
| 201 | ultrasonic wave transmission unit |
| M11, | M12, M13 microphone |
| MA11 | microphone array |
| T11 | ultrasonic tag |
| S11 | object |
| K11 | wall |
| U11, U12, U13 | ultrasonic wave propagation path |

**Claims**

1. A localization system for identifying a position of a sound source using propagation times of a sound wave propagating from the sound source to a plurality of microphone, comprising:

   object detection means for detecting a position, a shape, and the like of a surrounding object present around the plurality of microphones; and

   sound source position estimation means for estimating a position of the sound source based on the propagation times, wherein

   the sound source position estimation means has a reflection wave path estimation function for estimating a reflection wave path and its distance from the surrounding object identified by information from the object detection means, and based on the reflection wave path and the distance, the sound source position estimation means estimates the position of the sound source.

2. The localization system, according to Claim 1, further comprising:

   radio wave transmission means for transmitting a radio wave including an operational command to transmit an ultrasonic wave;

   ultrasonic wave reception array means including a plurality of microphones for receiving an ultrasonic wave from the sound source, the ultrasonic wave being transmitted by being urged by the command to transmit an ultrasonic wave;

   propagation time calculation means for calculating a time period required from a time that the radio wave is transmitted from the radio wave transmission unit until a time that an ultrasonic wave reaches each of the microphones of the ultrasonic wave reception array means; and

   object detection means for detecting a surrounding object present around the ultrasonic wave reception array means.

3. The localization system, according to Claim 2, wherein the object detection means has a relative position detecting function for detecting a shape and a position of an object reflecting an ultrasonic wave and a relative position of the object with respect to a microphone array, based on the microphone array included in the ultrasonic wave reception array means and a surrounding environment where the sound source is placed.

4. The localization system, according to Claim 2 or 3, wherein the sound source position estimation means includes:

   shortest reflection path calculation means for estimating a reflection path using information of the object for each of the microphones configuring a microphone array included in the ultrasonic wave reception array means and obtains an area where a shortest path length of the ultrasonic wave corresponds to the time calculated by the propagation time calculation means as a candidate area for an ultrasonic wave transmission means; and

   sound source position calculation means for calculating the position of the sound source from a relationship between candidate areas obtained for respective microphones.

5. The localization system, according to Claim 1, 2, 3 or 4, wherein
   the object detection means is configured as to measure and detect the position and the shape of the object using at least one of; a method of performing shape measurement with a range sensor using laser light; a method of estimating a three-dimensional shape from the position of the object and an observation result by causing a range sensor capable of measuring a distance on a two-dimensional plane to function; a method of performing shape restoration by stereo view using a plurality of cameras; a method of performing shape restoration by a factorization method using movement of a camera; and a method of performing shape restoration from gradation on a surface of an object using an image captured by a camera.

6. The localization system, according to any one of Claims 1 to 5, wherein
   the object detection means has a sensor for detecting a surrounding object and a sensor moving function for moving the sensor, a surrounding map creating function for creating a surrounding object map by detecting a surrounding object at a plurality of locations based on movement of the sensor moving mechanism, and an object position identifying function for identifying the position of the object using the surrounding object map created.

7. The localization system according to any one of Claims 1 to 5, wherein
   the object detection means has object matching means for detecting in advance what the surrounding object is, and outputs shape information regarding a stored surrounding object upon request, and
the object detection means has an off-range map creating function for creating an object map regarding the surrounding object in an area outside of a measurement range of a sensor provided to the object detection means, using the shape information from the object matching means.

8. The localization system, according to Claim 7, wherein the object matching means has a function of detecting a tag such as an RFID tag, an ultrasonic tag, or an image marker attached to an object, and acquiring information for identifying a surrounding object to which the tag is attached based on detected tag information and transmitting the information to the object detection means.

9. The localization system, according to Claim 7, wherein the object detection means has a function of identifying a surrounding object by performing image matching, and transmitting image information regarding the surrounding object to the object detection means.

10. The localization system, according to Claim 7, wherein the object matching means has a function of detecting a tag such as an RFID tag, an ultrasonic tag, or an image marker, identifying a position and orientation of the surrounding object based on the information obtained from the tag, and transmitting information regarding the identified surrounding object to the object detection means.

11. The localization system, according to Claim 7, wherein in a case where at least one of an RFID tag, an ultrasonic tag and an image marker is set as the tag and multiple pieces of the tags are attached to the surrounding object, the object matching means has a function of identifying a position and orientation of the surrounding object by detecting positions of the attached tags, and transmitting information regarding the identified surrounding object to the object detection means.

12. The localization system according to any one of Claims 7 to 11, wherein the object matching means detects a position and orientation of an object by performing matching with a shape of an object observed by the object detection means.

13. An object searching robot having the localization system according to any one of Claims 1 to 12.

14. A localization method for measuring propagation times of an ultrasonic wave propagating from a sound source to a plurality of microphones configuring a microphone array and identifying a position of the sound source based on the propagation times, comprising
a radio wave transmission step for transmitting a radio wave including an ultrasonic wave transmission command to an ultrasonic tag provided to the sound source;
an ultrasonic wave reception step for receiving, by the plurality of microphones, an ultrasonic wave transmitted from the ultrasonic tag in response to the ultrasonic wave transmission command;
a propagation time calculation step for calculating propagation times required from a time that the radio wave is transmitted until times that the ultrasonic wave reaches the plurality of microphones; and
a sound source position estimation step for estimating a reflective propagation path of the ultrasonic wave based on positional information and the like of the surrounding object which has been detected and identified regarding the surrounding object present around the microphone array and the propagation time for each of the microphones calculated in the propagation time calculation step, calculating a position of the ultrasonic tag, and estimating the position of the sound source.

15. The localization method, according to Claim 14, comprising, before the radio wave transmission step, a surrounding object detection step for detecting a surrounding object present around the microphone array and generating an object map.

16. The localization method, according to Claim 15, wherein the surrounding object detection step includes an object information storing step for detecting in advance a position, a shape and a size of the surrounding object present around the microphone array and storing as surrounding map information, and an object map generating step for generating an object map for identifying a relative position with the surrounding object viewed from the respective microphones configuring the microphone array basted on the surrounding map information stored.

17. The localization method according to Claim 16, wherein in the object information storing step, a movable sensor provided to the object detection means, having been disposed separately, detects positional information and shape information of a surrounding object present in a wide range around the microphone array, and the positional information an the shape information are stored as surrounding map information.

18. The localization method according to Claim 16 or 17, wherein in the object map generation step in the surrounding object detection step, shape information of an object corresponding to the surrounding object is extracted from an object matching means which has detected and stored the position, the shape, and the size of the surrounding object present around the microphone array, and arranged on the object map identified.

19. A sound source localization program for calculating propagation times of an ultrasonic wave propagating from a sound source to a plurality of microphones, and calculating a position of the sound source based on respective propagation times of a plurality of different ultrasonic waves detected by the plurality of microphones, the program causing a computer to perform:

a transmitting operation control function for controlling a radio wave transmitting operation of radio wave transmission means which transmits a radio wave including an ultrasonic wave transmission command to an ultrasonic tag;
a propagation time calculation function for calculating propagation times of an ultrasonic wave transmitted from the ultrasonic tag and received by the plurality of microphones, from a time that the radio wave is transmitted until a time that the ultrasonic wave reaches the respective microphones; and
a position estimation computing function for, if a position of a reflective object present around a microphone array has been detected in advance, estimating a reflective propagation path of the ultrasonic wave from a detection result of the reflective object, and calculating a position of the ultrasonic tag based on the estimated reflective propagation path of the ultrasonic wave and the propagation time for each of the microphones calculated by the propagation time calculation function.

20. The sound source localization program, according to Claim 19, further causing the computer to perform, when performing the position estimation computing function, a surrounding object identifying function for storing in advance positional information and shape information of a surrounding object present around the microphone array detected by object detection means provided separately, and generating an object map based on a detection result.

21. The sound source localization program, according to Claim 20, further causing the computer to perform, when performing the surrounding object identifying function, an object information storing function for, if information regarding a position, a shape, and a size of the surrounding object present around the microphone array has been detected by the object detection means provided separately, storing the information in a form of surrounding map information, and an object map generation function for generating an object map for identifying a relative position with the surrounding object viewed from the plurality of microphones configuring the microphone array, based on the surrounding map information stored.

22. The sound source localization program, according to Claim 20, causing the computer to perform the object map generation function by extracting shape information of an object corresponding to the surrounding object from object matching means which has detected and stored a position, a shape, and a size of the surrounding object present around the microphone array, and arranging the shape information on the object map.

FIG. 1

EP 2 063 287 A1

# FIG. 2A

DETECTED
OBJECT

104

M11

MA11

M12

M13

K11

S11

# FIG. 2B

105

SOUND SOURCE
POSITION CANDIDATE
CALCULATION UNIT

105A

SOUND SOURCE
POSITION
CALCULATION UNIT

105B

# FIG. 3A

K11

MA11

M11

M12

M13

S11

T11

# FIG. 3B

K11

U11

MA11

M11

M12

M13

S11

U13

T11

U12

# FIG. 4

AREA WHERE SOUND SOURCE FROM
WHICH SOUND WAVE PROPAGATES TO
MICROPHONE M11 WITH PATH LENGTH
D1 × v MAY BE PRESENT

A11

AREA WHERE SOUND SOURCE
FROM WHICH SOUND WAVE
PROPAGATES TO MICROPHONE
M12 WITH PATH LENGTH D2 × v
MAY BE PRESENT

A12

M11

S11

M12

M13

T11

A14

101

K11

A13

AREA WHERE SOUND SOURCE
FROM WHICH SOUND WAVE
PROPAGATES TO MICROPHONE
M13 WITH PATH LENGTH D3 × v
MAY BE PRESENT

# FIG. 5

```
( START )
    |
    v
┌─────────────────────────────────┐
│ TRANSMIT SIGNAL TO WHICH CALL    │ ~ S11
│ OBJECT TAG REACT, FROM RADIO WAVE│
│ TRANSMISSION UNIT                │
│ STORE TRANSMITTED TIME T0        │
└─────────────────────────────────┘
    |
    v
┌─────────────────────────────────┐
│ ANALYZE, BY ULTRASONIC WAVE      │ ~ S12
│ TRANSMISSION UNIT, RADIO WAVE    │
│ TRANSMITTED FROM RADIO WAVE      │
│ TRANSMISSION UNIT, AND IF IT IS  │
│ SIGNAL TO WHICH THE SELF TAG HAS │
│ TO REACT, TRASNMITS ULTRAOSNIC   │
│ WAVE                             │
└─────────────────────────────────┘
    |
    v
┌─────────────────────────────────┐
│ WHEN RECEIVING ULTRAOSNIC WAVE   │ ~ S13
│ FROM ULTRASONIC TAG AT RESPECTIVE│
│ MICROPHONES (M1~Mk) OF ULTRASONIC│
│ WAVE RECEPTION ARRAY UNIT, RECORD│
│ RECEIVED TIME TR1~TRk FOR        │
│ RESPECTIVE MICROPHONES           │
└─────────────────────────────────┘
    |
    v
┌─────────────────────────────────┐
│ DETECT SURROUNDING OBJECT AND    │ ~ S14
│ GENERATE OBJECT MAP BY OBJECT    │
│ DETECTION UNIT                   │
└─────────────────────────────────┘
    |
    v
┌─────────────────────────────────┐
│ CALCULATE, BY PROPAGATION TIME   │ ~ S15
│ CALCULATION UNIT, TIME PERIOD    │
│ FROM THE TIME RADIO WAVE         │
│ TRANSMISSION UNIT TRANSMITS      │
│ RADIO WAVE UNTIL EACH MICROPHONE │
│ ARRAY RECEIVES ULTRASONIC WAVE   │
│ AND TIME DIFFERENCE FOR EACH     │
│ MICROPHONE                       │
│ TIME DIFFERENCE OF MICROPHONE Mi │
│ IS Di=TRi-T0                     │
└─────────────────────────────────┘
    |
    v
┌─────────────────────────────────┐
│ IN POSITION ESTIMATION UNIT,     │ ~ S16
│ CALCULATE POSITION OF ULTRASONIC │
│ TAG USING OBJECT MAP CALCULATED  │
│ BY OBJECT DETECTION UNIT AND     │
│ ULTRASONIC WAVE ARRIVAL TIME     │
│ (D1~Dk) AT EACH MICROPHONE       │
│ CALCULATED BY PROPAGATION TIME   │
│ CALCULATION UNIT                 │
└─────────────────────────────────┘
    |
    v
( END )
```

# FIG. 6

START

i=1 — S21

CALCULATE ALL POINTS WHERE SHORTEST PATH DISTANCE FROM MICROPHONE Mi IS ($D_i \times v$) BY SOUND SOURCE POSITION CANDIDATE CALCULATION UNIT, AND DETERMINE THE SET AS $Z_i$ — S22

i=i+1 — S23

S24

$i \leq n$

YES

NO

FIND COMMON PART IN {$Z_i$} (i=1, N), DETERMINE IT AS TAG POSITION, IF NO COMMON PART IN ALL $Z_i$, ELEMENT INCLUDED IN LARGEST NUMBER OF $Z_i$ IS DETERMINED AS TAG POSITION — S25

END

24

FIG. 7

START → i=1 (S31)

S32: CALCULATE AREA Ri ON OBJECT SURFACE WHERE DISTANCE FROM MICROPHONE Mi IS (Di×v) OR LESS

S33: ANY Ri ? — NO → S48: CALCULATE SET {Yi} OF POINT WHERE MiYi=Di×v

YES ↓

S34: CALCULATE AREA Ci WHICH CAN BE LINKED WITH STREIGHT LINE WITHOUT ANY OBJECT FROM Mi IN Ri

S35: DIVIDE Ci INTO SMALL AREAS, ARRANGE POINT IN EACH AREA. THE POINT IS {Pij(1)}j=1, ···, Li. FOR EACH POINT {Pij(1)}, CALCULATE HALF LINE Kij(1) PARALLEL TO LINE SEGMENT LINE-SYMMETRY TO LINE SEGMENT MiPij(1) WITH RESPECT TO VERTICAL LINE OF TANGENT PLANE WITH Ci AND STARTING FROM Pij

S36: j=1

S37: HALF LINE Kij(1) CROSS OBJECT SURFACE WITHIN A DISTANCE (Di×V-MiPij(1)) FROM Pij(1) ? — YES →

NO ↓

S38: CALCULATE POINT Xij ON HALF LINE Kij AND DISTANCE FROM Pij(1) IS ((Di×v)-MiPij(1)-Pij(1)Xij. PATH MiPij(1), Pij(1)Xij IS Sij

S39: k=1

S40: POINT CLOSET TO Pij(k) AMONG POINTS WHERE Kij(k) CROSSES OBJECT SURFACE IS SET TO BE Pij(k+1). CALCULATE HALF LINE Kij(k+1) LINE SYMMETRY TO Kij(k) TO VERTICAL LINE OF TANGENT PLANE OF OBJECT SURFACE INCLUDING Pij(k+1) AND STARTING FROM Pij(k+1)

S41: HALF LINE Kij(k) CROSS OBJECT SURFACE WITH DIATANCE FROM Pij(k) WITHIN

$$Di \times v - MiPij(1) - \sum_{k=1}^{N} Pij(k)Pij(k+1) \, (1) \, ?$$

YES → S41a: k=k+1

NO ↓

S42: CALCULATE POINT Xij ON HALF LINE Kij(k) and DISTANCE FROM Pij(k) IS

$$Di \times v - MiPij(1) - \left( \sum_{k=1}^{N} Pij(k)Pij(k+1) \right) - Pij(k)Xij(2)$$

PATH MiPij(1), {Pij(n)Pij(n+1)} (n=1,···k-1), Pij(k) Xij ARE Sij

S43: j=j+1

S44: j≦Li — YES ↑

NO ↓

S45: DETERMINE A UNION OF A SET OF {Yi} AND A SET IN WHICH THERE IS NO m WHERE Xij Sim(m≠j) AND AN OBJECT EXISTS ON MiXij AND A GROUP OF {Yi} AS Zi

S46: i=i+1

S47: i≦n — YES ↑

NO ↓

S49: FIND COMMON PART IN {Zi} (i=1, ···,n) AND DETERMINE AS TAG POSITION. IF THERE IS NO COMMON PART IN ALL Zi, DETERMINE ELEMENT INCLUDED IN LARGEST NUMBER OF Zi AS TAG POSITION

END

EP 2 063 287 A1

25

# FIG. 8A

# FIG. 8B

# FIG. 8C

# FIG. 8D

# FIG. 8E

Mi MICROPHONE

Mi

$Di \times v$

Ri

Mi

$Di \times v$

Ci

Mi

$Di \times v$

Ci

Pi1(1)

Ki1

Xi1

Mi

$Di \times v$

Ci

Pi2(1)

Ki2

Xi2

EP 2 063 287 A1

# FIG. 9

EP 2 063 287 A1

# FIG. 10

START

MOVE SENSOR MOUNTING PART BY MOVING UNIT — S51

DETECT SURROUNDING OBJECT BY OBJECT DETECTION UNIT, CREATE MAP OF SHAPE AND POSITION OF OBJECT FROM DETECTION RESULT AND MOVED QUANTITY BY MOVING UNIT — S52

S53 — OBSERVE ULTRAOSNIC TAG ?

NO

YES

S54 — TRANSMIT SIGNAL TO WHICH CALL OBJECT TAG REACT FROM RADIO WAVE TRANSMISSION UNIT STORE TRASNTMITTED TIME T0

S55 — ANALYZE RADIO WAVE TRANSMITTED FROM RADIO WAVE TRANSMISSION UNIT, AND IF IT IS SIGNAL SELF TAG HAS TO REACT, TRANSMIT ULTRAOSNIC WAVE, BY ULTRASONIC WAVE TRANSMISSION UNIT

S56 — WHEN RECEIVING ULTRASONIC WAVE FROM ULTRASONIC TAG BY MICROPHONES (M1~Mk) IN ULTRASONIC WAVE RECEPTION ARRAY UNIT, RECORD RECEIVED TIME TR1~TRk FOR RESPECTIVE MICROPHONES

S57 — CALCULATE SURROUNDING OBJECT MAP OF ULTRASONIC WAVE RECEPTION ARRAY UNIT FROM CURRENT POSITION MANAGED BY MOVING UNIT AND OBJECT MAP MANAGED BY OBJECT DETECTION UNIT

S58 — CALCULATE, BY PROPAGATION TIME CALCULATION UNIT, TIME PERIOD FROM THE TIME RADIO WAVE TRANSMISSION UNIT TRANSMITS RADIO WAVE UNTIL EACH MICROPHONE ARRAY RECEIVES ULTRASONIC WAVE AND TIME DIFFERENCE FOR EACH MICROPHONE TIME DIFFERENCE OF MICROPHONE $Mi$ IS $Di=TRi-T0$

S59 — IN POSITION ESTIMATION UNIT, CALCULATE POSITION OF ULTRASONIC TAG USING OBJECT MAP CALCULATED BY OBJECT DETECTION UNIT AND ULTRASONIC WAVE ARRIVAL TIME (D1~Dk) AT EACH MICROPHONE CALCULATED BY PROPAGATION TIME CALCULATION UNIT

END

# FIG. 11

EP 2 063 287 A1

```
                                            ┌──────────────┐
                                         101│ RADIO WAVE   │
                                            │ TRANSMISSION │
        200                                 │    UNIT      │
  ┌──────────────────────┐                  └──────────────┘
  │                      │◄‑‑‑‑‑‑‑‑‑‑‑‑‑‑‑‑‑‑‑‑‑‑
  │  201 ┌────────────┐  │      102              103
  │      │ ULTRASONIC │  │  ┌──────────────┐ ┌──────────────────┐
  │      │   WAVE     │  │  │  ULTRASONIC  │ │ PROPAGATION TIME │
  │      │TRANSMISSION│‑‑►│  │WAVE RECEPTION│─│ CALCULATION UNIT │
  │      │    UNIT    │  │  │  ARRAY UNIT  │ └──────────────────┘
  │      └────────────┘  │  └──────────────┘
  │                      │   ┌────────────┐     105
  │                      │104│   OBJECT   │ ┌──────────────┐
  │                      │   │ DETECTION  │─│   POSITION   │
  └──────────────────────┘   │    UNIT    │ │  ESTIMATION  │
                             └────────────┘ │     UNIT     │
                                            └──────────────┘
                          107 ┌─────────────────┐
                              │     OBJECT      │
                              │ MATCHING UNIT   │
                              │ ┌─────────────┐ │
                              │ │   OBJECT    │ │  107A
                              │ │ IDENTIFYING │ │
                              │ │    UNIT     │ │
                              │ └─────────────┘ │
                              │ ┌─────────────┐ │  107B
                              │ │   OBJECT    │ │
                              │ │    SHAPE    │ │
                              │ │STORING UNIT │ │
                              │ └─────────────┘ │
                              └─────────────────┘
```

# FIG. 12

```
( START )
```

↓

S61 — TRANSMIT SIGNAL TO WHICH CALL OBJECT TAG REACT FROM RADIO WAVE TRANSMISSION UNIT STORE TRASNTMITTED TIME T0

↓

S62 — ANALYZE RADIO WAVE TRANSMITTED FROM RADIO WAVE TRANSMISSION UNIT, AND IF IT IS SIGNAL SELF TAG HAS TO REACT, TRANSMIT ULTRASONIC WAVE, BY ULTRASONIC WAVE TRANSMISSION UNIT

↓

S63 — WHEN RECEIVING ULTRASONIC WAVE FROM ULTRASONIC TAG BY MICROPHONES (M1~Mk) IN ULTRAOSNIC WAVE RECEPTION ARRAY UNIT, RECORD RECEIVED TIME TR1~TRk FOR RESPECTIVE MICROPHONES

↓

S64 — MATCH, BY OBJECT MATCHING UNIT, WHICH OF REGISTERED OBJECTS THE SURROUNDING OBJECT IS, DETECT POSITION/ORIENTATION OF OBJECT, TRANSMIT REGISTERED SHAPE INFORMATION AND OBJECT POSITION FOR EACH OBJECT TO OBJECT DETECTION UNIT

↓

S65 — DETECT SURROUNDING OBJECT AND GENERATE OBJECT MAP BY OBJECT DETECTION UNIT

↓

S66 — BY ARRANGING OBJECT SHAPE RECEIVED BY OBJECT MATCHING UNIT ON OBJECT MAP ON OBJECT DETECTION UNIT, GENERATE OBJECT MAP

↓

S67 — CALCULATE, BY PROPAGATION TIME CALCULATION UNIT, TIME PERIOD FROM THE TIME RADIO WAVE TRANSMISSION UNIT TRANSMITS RADIO WAVE UNTIL EACH MICROPHONE ARRAY RECEIVES ULTRASONIC WAVE AND TIME DIFFERENCE FOR EACH MICROPHONE TIME DIFFERENCE IN MICROPHONE Mi IS Di=TRi-T0

↓

S68 — IN POSITION ESTIMATION UNIT, CALCULATE POSITION OF ULTRASONIC TAG USING OBJECT MAP CALCULATED BY OBJECT DETECTION UNIT AND ULTRASONIC WAVE ARRIVAL TIME (D1~Dk) AT EACH MICROPHONE CALCULATED BY PROPAGATION TIME CALCULATION UNIT

↓

```
( END )
```

# FIG. 13

A

M1

MA MICROPHONE
ARRAY

M2

M3

S OBJECT

T ULTRASONIC TAG

K WALL

## INTERNATIONAL SEARCH REPORT

International application No.

PCT/JP2007/066098

A. CLASSIFICATION OF SUBJECT MATTER
*G01S5/30*(2006.01)i, *G01S15/74*(2006.01)i, *G01S17/06*(2006.01)i

According to International Patent Classification (IPC) or to both national classification and IPC

B. FIELDS SEARCHED

Minimum documentation searched (classification system followed by classification symbols)
G01S5/18-5/30, G01S7/00-7/64, G01S13/00-17/95

Documentation searched other than minimum documentation to the extent that such documents are included in the fields searched
Jitsuyo Shinan Koho           1922-1996   Jitsuyo Shinan Toroku Koho   1996-2007
Kokai Jitsuyo Shinan Koho     1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2006/080120 A1 (Matsushita Electric Industrial Co., Ltd.), 03 August, 2006 (03.08.06), Claims 1 to 3, 9; description, Par. Nos. [0038] to [0095]; Fig. 2 & US 2006/0259213 A1 | 1-5,13,14,19<br>6-12,15-18, 20-22 |
| Y<br><br>A | JP 2005-043151 A (Toshiba Corp.), 17 February, 2005 (17.02.05), Claim 9; Par. Nos. [0060] to [0062] (Family: none) | 6,15-18, 20-22<br>7-12 |
| Y<br><br>A | JP 2004-230539 A (National Institute of Advanced Industrial Science and Technology), 19 August, 2004 (19.08.04), Par. Nos. [0008] to [0012] (Family: none) | 7-12<br>6,15-18, 20-22 |

☒ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>04 September, 2007 (04.09.07) | Date of mailing of the international search report<br>18 September, 2007 (18.09.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/066098 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,X | JP 2007-101295 A  (Matsushita Electric Industrial Co., Ltd.), 29 April, 2007 (29.04.07), Claims 1 to 3, 9; Par. Nos. [0038] to [0094]; Fig. 2 (Family: none) | 1-5,13,14,19 |
| A | JP 7-146366 A  (Nippon Telegraph And Telephone Corp.), 06 June, 1995 (06.06.95), Full text; all drawings (Family: none) | 1-22 |
| A | JP 2004-348242 A  (Hitachi, Ltd.), 09 December, 2004 (09.12.04), Full text; all drawings (Family: none) | 1-22 |
| A | JP 2005-10011 A  (Matsushita Electric Industrial Co., Ltd.), 13 January, 2005 (13.01.05), Full text; all drawings (Family: none) | 1-22 |
| A | JP 2006-209770 A  (Samsung Electronics Co., Ltd.), 10 August, 2006 (10.08.06), Full text; all drawings & US 2006/0165276 A1    & EP 1684143 A1 | 1-22 |
| A | JP 2004-276168 A  (Japan Science and Technology Agency), 07 October, 2004 (07.10.04), Full text; all drawings (Family: none) | 1-22 |

Form PCT/ISA/210 (continuation of second sheet) (April 2005)

## INTERNATIONAL SEARCH REPORT

| International application No. |
| --- |
| PCT/JP2007/066098 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
    The search has revealed that the technical feature common to the inventions of claims 1-13 and claims 14-22  is not novel since it is disclosed in Document WO 2006/080120 A1 (Matsushita Electric Industrial Co., Ltd.), 03 August, 2006 (03.08.06), claims 1-3, 9, Description paragraphs [0038]-[0095], Fig. 2.
    Accordingly, this common feature cannot be a special technical feature within the meaning of PCT Rule 13.2, second sentence.
    Consequently, the inventions of claims 1-13 and the inventions of claims 14-22 do not satisfy the requirement of unity of invention.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable,
the             payment of a protest fee..

☐ The additional search fees were accompanied by the applicant's protest but the applicable protest fee was not paid within the time limit specified in the invitation.

Form PCT/ISA/210 (continuation of first sheet (2)) (April 2005)

EP 2 063 287 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005156250 A
- JP 2006233015 A